# EUROPEAN PATENT APPLICATION

(11) **EP 4 803 771 A1**
(43) Date of publication of application: **09.09.2026**
(21) Application number: 24885451.5
(22) Date of filing: 16.10.2024
(51) Int. Cl.: F16D 48/06, F16D 11/04

(54) **DOG CLUTCH ENGAGEMENT CONTROL SYSTEM**

(30) Priority: 30.10.2023 JP 2023185557
(71) Applicant: DENSO CORPORATION, Kariya-city, Aichi 448-8661 (JP)
(72) Inventor: NAKANISHI, Daisuke, Kariya-city, Aichi 4488661 (JP); KATO, Yoshinori, Kariya-city, Aichi 4488661 (JP); SHIKATA, Yasuhiro, Kariya-city, Aichi 4488661 (JP); NAKATANI, Kazushi, Kariya-city, Aichi 4488661 (JP)
(74) Representative: Kuhnen & Wacker Patent- und Rechtsanwaltsbüro PartG mbB
(86) International application number: PCT/JP2024/036891
(87) International publication number: WO 2025/094677

(57) **Abstract**

A clutch actuator (5) relatively moves a first clutch member (11) and a second clutch member (12) relative to each other in an axial direction. A phase difference sensor (6) detects a phase difference between the first clutch member (11) and the second clutch member (12). A controller (7) executes a synchronization operation that gradually decreases an input-output rotational speed difference until it reaches a target rotational speed difference (ωs), and the controller (7) detects a current latest engagement timing based on an output of the phase difference sensor (6). After an adjustment reference time point (t1), at which the input-output rotational speed difference reaches a phase-difference-detectable rotational speed difference (ω0) that allows the phase difference sensor to detect the phase difference, the controller (7) adjusts the phase difference by changing a change characteristic of the input-output rotational speed difference such that one of future engagement timings coincides with a target completion time point (tall), based on information obtained at an arbitrary phase difference detection time point (td).

## Description

### CROSS REFERENCE TO RELATED APPLICATION

This application is based on and incorporates herein by reference Japanese Patent Application No. 2023-185557 filed on October 30, 2023.

### TECHNICAL FIELD

The present disclosure relates to a dog clutch engagement control system.

### BACKGROUND ART

Previously, a dog clutch engagement control system is known. This dog clutch engagement control system engages an input shaft and an output shaft, which respectively rotate at different speeds in a disengaged state. For example, the patent literature 1 discloses a technology that predicts a future engagement timing based on a plurality of past engagement timings detected based on an output of a phase difference sensor. A controller executes a synchronization operation such that a rotational speed difference between an electric motor and an axle of a vehicle (i.e., an input-output rotational speed difference) reaches a predetermined target rotational speed difference. Then, a clutch actuator is preliminarily driven such that the dog clutch is engaged at a predicted engagement timing after the input-output rotational speed difference reaches the target rotational speed difference.

### CITATION LIST

### PATENT LITERATURE

PATENT LITERATURE 1: JP2021-025561A

### SUMMARY OF INVENTION

In the technology of the patent literature 1, the controller stores a plurality of past engagement timings and predicts a future engagement timing by calculating an approximation line that passes through a point of each of the past engagement timings. Since the future engagement timing is predicted by approximation based on the past engagement timings, an error (a difference) between this and the actual operation increases. As a result, a phase alignment time length from a time point, at which the input-output rotational speed difference reaches the target rotational speed difference, to a time point of executing the engagement, becomes longer, and the responsiveness to the engagement instruction deteriorates.

It is an objective of the present disclosure to provide a dog clutch engagement control system that achieves phase difference adjustment of input and output shafts with high-precision and improves responsiveness of clutch engagement.

According to the present disclosure, there is provided a dog clutch engagement control system that includes a dog clutch, a clutch actuator, a phase difference sensor and a controller.

The dog clutch is configured to switch between an engaged state, in which the first clutch member and the second clutch member are engaged with each other, and a disengaged state, in which the first clutch member and the second clutch member are disengaged from each other. The first clutch member is coupled to an input shaft and has a plurality of first engagement teeth arranged in a circumferential direction of the dog clutch. The second clutch member is coupled to an output shaft and has a plurality of second engagement teeth arranged in the circumferential direction. The plurality of second engagement teeth are configured to engage with the plurality of first engagement teeth directly or indirectly via a relay member.

In the dog clutch engagement control system mounted on a vehicle, the input shaft is coupled to, for example, an electric motor or an internal combustion engine via a speed reducer. The output shaft is coupled to drive wheels of the vehicle via an axle.

The clutch actuator is configured to relatively move the first clutch member and the second clutch member relative to each other in an axial direction of the dog clutch, or, relatively move the relay member in the axial direction relative to the first clutch member and the second clutch member in a case where the relay member is used. A phase difference sensor is configured to detect a phase difference between the first clutch member and the second clutch member.

The controller is configured to control an input-output rotational speed difference, which is a difference between a rotational speed of the input shaft and a rotational speed of the output shaft. In response to an engagement instruction, which instructs to shift the dog clutch from the disengaged state into the engaged state, the controller is configured to execute a synchronization operation to gradually decrease the input-output rotational speed difference until the input-output rotational speed difference reaches a target rotational speed difference at which the dog clutch is shiftable into the engaged state.

In the synchronization operation, with respect to an engagement timing, at which the phase difference reaches an allowable phase difference that allows the dog clutch to be shifted into the engaged state, the controller is configured to detect a current latest engagement timing, which is the engagement timing detected most recently, based on an output of the phase difference sensor. The controller is configured to output a drive instruction to the clutch actuator to cause the dog clutch to be shifted into the engaged state at one of a plurality of future engagement timings, each of which is subsequent to a timing at which the input-output rotational speed difference reaches the target rotational speed difference.

After reaching an adjustment reference time point, at which the input-output rotational speed difference reaches a phase-difference-detectable rotational speed difference that allows the phase difference sensor to detect the phase difference, the controller is configured to adjust the phase difference between the first clutch member and the second clutch member based on information, which is obtained at an arbitrary phase difference detection time point where an arbitrary phase difference is detected according to the output of the phase difference sensor, by changing a change characteristic of the input-output rotational speed difference, such that the one of the plurality of future engagement timings coincides with a target completion time point that is a time point at which a target completion time length elapses from the adjustment reference time point. The adjustment reference time point is the time point at which the input-output rotational speed difference reaches the phase-difference-detectable rotational speed difference that allows the phase difference to be detected by the phase difference sensor. The target completion time point is the time point at which a target completion time length elapses from the adjustment reference time point. The arbitrary phase difference detection time point is, for example, a detection time point of the first engagement timing after the adjustment reference time point.

The change characteristic of the input-output rotational speed difference, which is changed in the phase difference adjustment of the present disclosure, is, for example, a gradient, which is a time rate of change of the input-output rotational speed difference, or a target rotational speed difference. In the present disclosure, the controller changes the change characteristic of the input-output rotational speed difference during the synchronization operation, thereby making it possible to achieve the phase difference adjustment with high-precision and improve the responsiveness of the clutch engagement.

Here, an alternative control method is assumed. According to this control method, an arrival timing is defined as a timing at which the input-output rotational speed difference reaches the target rotational speed difference during the synchronization operation. Then, in this control method, after the future engagement timing is predicted, this engagement timing is controlled to coincide with the arrival timing. In that case, when torque is applied to the input shaft in an attempt to make the engagement timing coincide with the arrival timing, the input shaft rotational speed changes, and the arrival timing shifts. Therefore, the precision of the phase difference adjustment may be deteriorated. In contrast, in the present disclosure, the changing of the change characteristic of the input-output rotational speed difference and the phase difference adjustment are executed simultaneously based on the information obtained at the arbitrary phase difference detection time point. Therefore, the phase difference adjustment can be achieved with high precision. Furthermore, in the present disclosure, the future engagement timing does not necessarily need to be predicted.

### BRIEF DESCRIPTION OF DRAWINGS

The present disclosure, together with additional objectives, features and advantages thereof, will be best understood from the following description in view of the accompanying drawings.
FIG. 1 is a diagram illustrating a configuration example of a vehicle to which a dog clutch engagement control system is applied.
FIG. 2 is a schematic diagram illustrating switching between 2WD and 4WD.
FIG. 3 is a diagram indicating time charts of a switching operation from 2WD to 4WD by a control operation of a comparative example and a control operation of the present embodiment.
FIG. 4 is a schematic diagram illustrating a state transition of a dog clutch.
FIG. 5 is a configuration diagram of the dog clutch engagement control system according to the present embodiment.
FIG. 6 is a block diagram of a controller.
FIG. 7 is a diagram for explaining a detection principle of a phase difference sensor.
FIG. 8 is a diagram illustrating a beat waveform of a phase difference sensor output.
FIG. 9 is a diagram indicating time charts of a synchronization operation according to a first embodiment.
FIG. 10 is a diagram indicating time charts of a phase difference adjustment (after an adjustment reference time point t1 in FIG. 9) according to the first embodiment.
FIG. 11 is a flowchart of a clutch engagement control operation according to the first embodiment.
FIG. 12 is a diagram indicating time charts of a phase difference adjustment according to a second embodiment.
FIG. 13 is a diagram indicating time charts of a phase difference adjustment according to a third embodiment.
FIG. 14 is a diagram indicating time charts of a phase difference adjustment according to a fourth embodiment.
FIG. 15 is a diagram indicating time charts of a phase difference adjustment according to a fifth embodiment.
FIG. 16 is a diagram indicating time charts of a phase difference adjustment according to a sixth embodiment.
FIG. 17 is a diagram indicating time charts of a phase difference adjustment according to a seventh embodiment.
FIG. 18 is a diagram indicating time charts of a phase difference adjustment at a first phase-difference detection time point td1 according to an eighth embodiment.
FIG. 19 is a diagram indicating time charts of a phase difference adjustment at a second phase-difference detection time point td2 according to the eighth embodiment.
FIG. 20 is a diagram indicating time charts of a phase difference adjustment at a third phase-difference detection time point td3 according to the eighth embodiment.
FIG. 21 is a flowchart of a clutch engagement control operation according to the eighth embodiment.

### DESCRIPTION OF EMBODIMENTS

A plurality of embodiments of a dog clutch engagement control system will be described with reference to the drawings. A basic system configuration of the first to eighth embodiments is the same, and a control configuration by a controller differs among the first to eighth embodiments. Furthermore, the first to eighth embodiments are collectively referred to as the present embodiment. The dog clutch engagement control system of the present embodiment is a system that engages a dog clutch by driving a clutch actuator in accordance with an engagement timing when the dog clutch provided in a powertrain system of a vehicle is in a disengaged state.

### (Vehicle, Dog Clutch Engagement Control system)

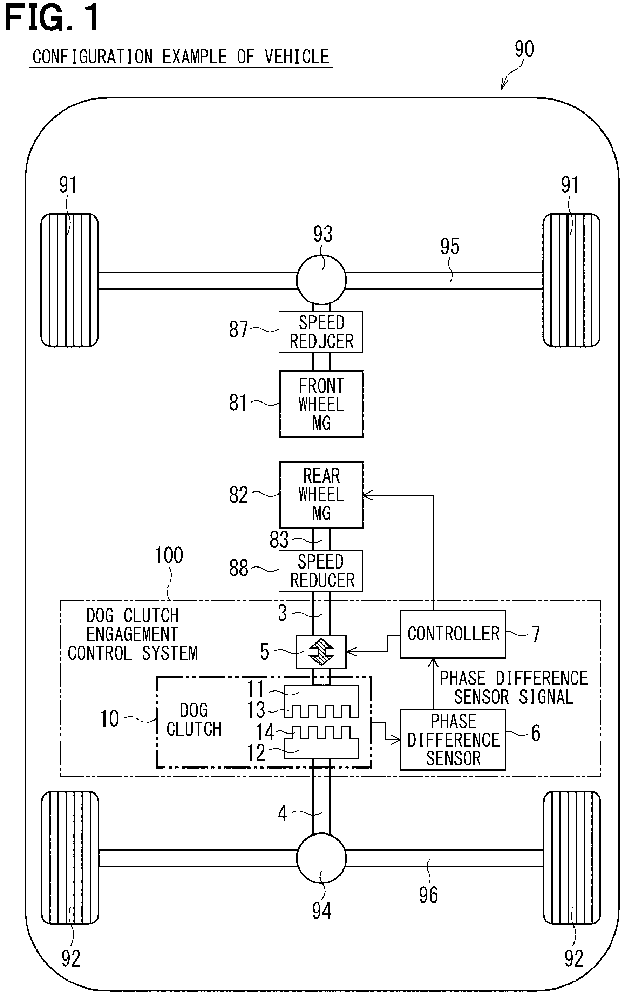

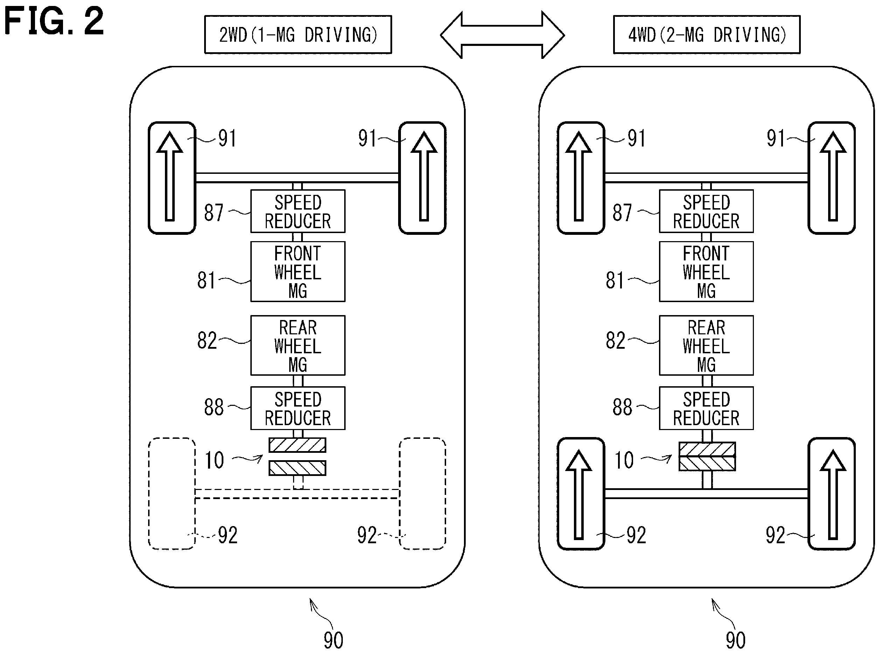

A configuration example of the vehicle 90, to which the dog clutch engagement control system is applied, will be described with reference to FIGS. 1 and 2. This vehicle 90 is an electric vehicle that uses two motor generators (MGs), namely a front wheel MG 81 and a rear wheel MG 82, as its power sources. The MGs 81, 82 serve both as electric motors during a power running operation and as generators during a regenerative operation. This vehicle 90 is capable of switching between two-wheel drive (2WD) using only front wheels 91 and four-wheel drive (4WD) using both the front wheels 91 and rear wheels 92.

The front wheel MG 81 is constantly connected to the front wheels 91 via a differential gear unit (hereinafter referred to as a differential) 93 and a connecting shaft 95. Accordingly, the front wheels 91 always serve as drive wheels. On the other hand, a dog clutch 10 is provided in a power transmission path from the rear wheel MG 82 to the rear wheels 92. In the example shown in FIG. 1, the dog clutch 10 is provided between the rear wheel MG 82 and the differential 94, but the dog clutch 10 may alternatively be provided on the rear wheel 92 side of the differential 94.

When the dog clutch 10 is in a disengaged state, the rear wheel MG 82 is disconnected from the rear wheels 92, and the rear wheels 92 are rotated as follower wheels of the front wheels 91. When the dog clutch 10 is in an engaged state, the rear wheel MG 82 is connected to the rear wheels 92 via the differential 94 and a connecting shaft 96. At this time, the rear wheels 92 also become drive wheels in addition to the front wheels 91. It should be noted that speed reducers 87, 88 may be respectively provided on the output shaft of the front wheel MG 81 and the output shaft of the rear wheel MG 82.

Therefore, by switching between the disengaged state and the engaged state of the dog clutch 10, the vehicle 90 can be switched between 2WD and 4WD. For example, on a flat road where a load is relatively low, 2WD driving with the single MG is selected. In contrast, on an uphill road where a high driving force is required, 4WD driving with the two MGs is selected. When switching from 4WD to 2WD, it is required to reduce drag losses by disengaging the clutch, thereby improving power consumption efficiency. When switching from 2WD to 4WD, highly responsive clutch engagement is required to achieve responsive acceleration performance. If clutch engagement is delayed, the torque response of the rear wheel MG 82, which has been disconnected, will be delayed, resulting in a delay in the overall torque response of the vehicle. As a result, the torque response to the driver's accelerator operation is delayed, which affects drivability of the vehicle.

When a higher-level vehicle controller (not shown) determines that it is necessary to switch from 2WD to 4WD based on the operating state of the vehicle, an external environment (e.g., a road surface) or an instruction from the driver, the higher-level vehicle controller transmits an engagement instruction to a dog clutch engagement control system 100. When the dog clutch engagement control system 100 receives the engagement instruction during the disengaged state of the dog clutch 10, the dog clutch engagement control system 100 drives and places the dog clutch 10 into the engaged state. The dog clutch engagement control system 100 includes the dog clutch 10, a clutch actuator 5, a phase difference sensor 6, and a controller 7. In the following specification and drawings, the clutch actuator 5 may be referred to as "ACT" as appropriate.

The dog clutch 10 includes a first clutch member 11, which is coupled to an input shaft 3, and a second clutch member 12, which is coupled to an output shaft 4. The first clutch member 11 has a plurality of first engagement teeth 13 arranged in a circumferential direction of the dog clutch 10 and is configured to rotate about a central axis of the dog clutch 10. The second clutch member 12 has a plurality of second engagement teeth 14, which are arranged in the circumferential direction and are configured to directly engage with the first engagement teeth 13, and the second clutch member 12 is configured to rotate coaxially and in the same direction as the first clutch member 11. In the configuration example shown in FIG. 1, the speed reducer 88 is provided between the rear wheel MG 82 and the first clutch member 11. The rotation of a motor shaft 83 of the rear wheel MG 82 is reduced by the speed reducer 88 and is transmitted to the input shaft 3.

The clutch actuator 5 causes relative axial movement between the first clutch member 11 and the second clutch member 12. The clutch actuator 5 is not necessarily provided on the first clutch member 11 side and may be alternatively provided on the second clutch member 12 side. When the first clutch member 11 and the second clutch member 12 are moved relative to each other in a direction of approach, the dog clutch 10 is placed in the engaged state where the first engagement teeth 13 and the second engagement teeth 14 are engaged with each other. When the first clutch member 11 and the second clutch member 12 are moved relative to each other in a direction away from each other, the dog clutch 10 is placed in the disengaged state where the first engagement teeth 13 and the second engagement teeth 14 are disengaged from each other. That is, the engaged state and the disengaged state of the first clutch member 11 and the second clutch member 12 are switched by the axial relative movement between the first clutch member 11 and the second clutch member 12. It should be noted that a sleeve-type clutch, which is different from this type of clutch, will be described in the section "Other Embodiments."

When the input shaft 3 and the output shaft 4 are rotating at different rotational speeds in the disengaged state of the dog clutch 10, the phase difference sensor 6 detects a phase difference between the first clutch member 11 and the second clutch member 12, that is, the phase difference between the input shaft 3 and the output shaft 4, and the phase difference sensor 6 outputs a phase difference sensor signal to the controller 7. The dog clutch engagement control system 100 of the present embodiment is mounted on the vehicle 90 in which the output shaft 4 is coupled to the rear wheels 92, which are drive wheels.

Hereinafter, a timing at which the phase difference becomes a phase difference that allows the dog clutch 10 to be engaged is defined as an engagement timing. The term "engagement timing" includes not only a single timing at which an engagement operation is actually executed, but also each of a plurality of timings that pass without engagement even though engagement is possible. The controller 7 detects the current engagement timing based on the phase difference sensor signal and outputs a drive instruction to the clutch actuator 5 in accordance with a future engagement timing. Specifically, the controller 7 starts a preliminary operation of the clutch actuator 5 at a time point that precedes the future engagement timing by a predetermined preliminary operation time length. The controller 7 also controls an input-output rotational speed difference, which is a difference between the rotational speed of the input shaft 3 and the rotational speed of the output shaft 4, by controlling the rotation of the rear wheel MG 82. Hereinafter, the reference signs for the input shaft 3 and the output shaft 4 related to the rotational speed will be omitted as appropriate.

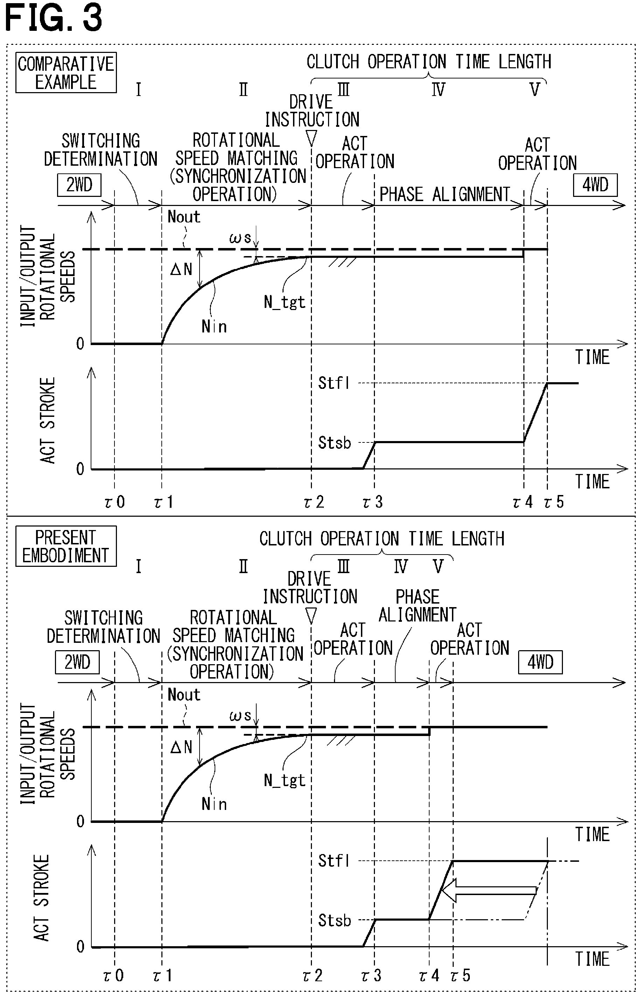

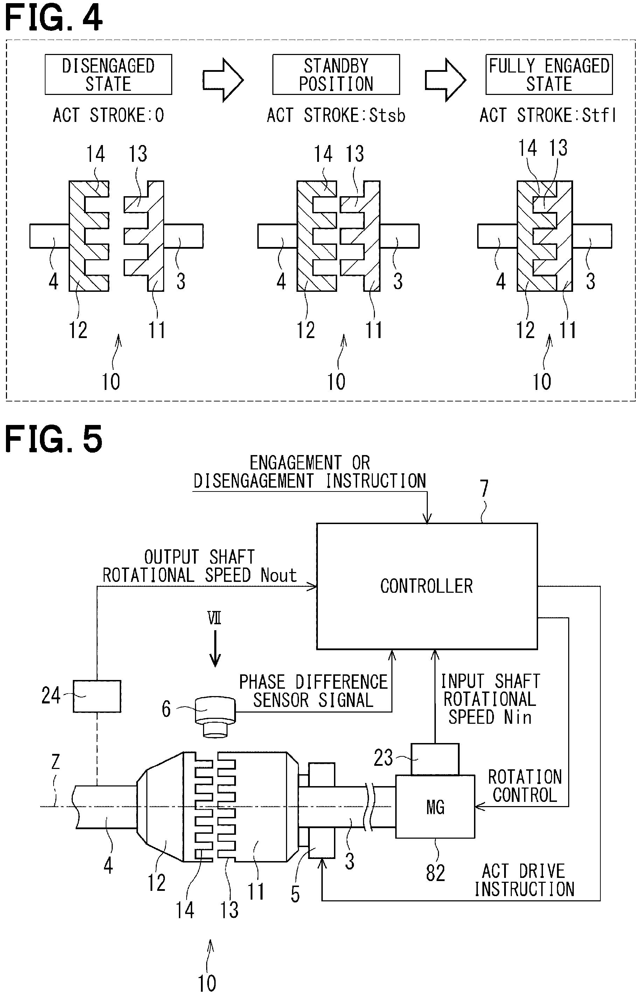

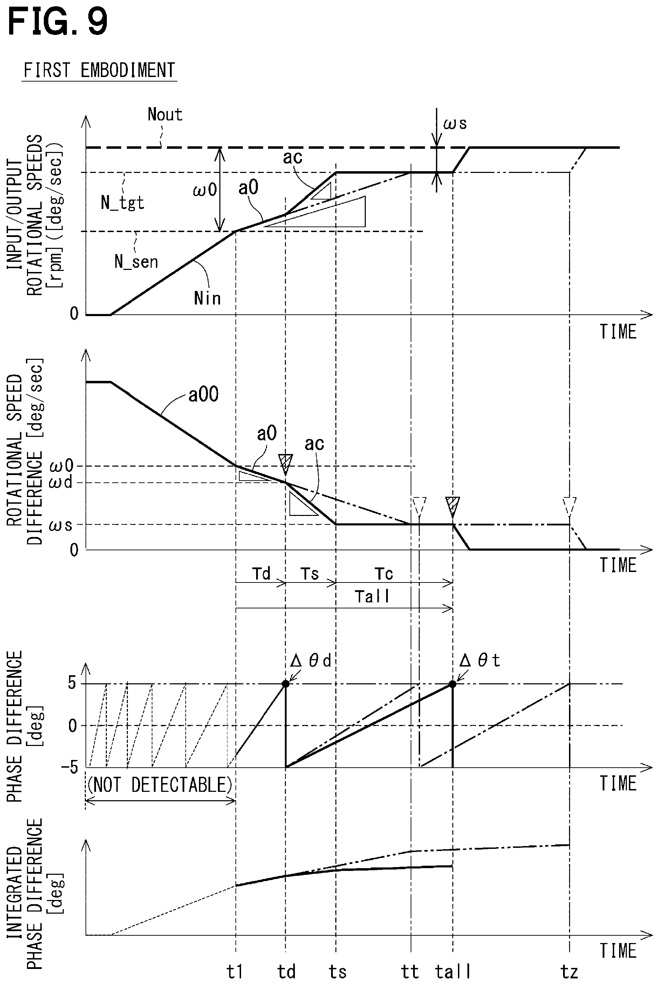

With reference to FIGS. 3 and 4, a general engagement operation during switching from 2WD to 4WD will be described. FIG. 3 shows changes in input/output rotational speeds and an ACT stroke according to a control operation of a comparative example and a control operation of the present embodiment. To distinguish from symbols such as time point t1 used in FIG. 9 and the like, symbols "τ0 to τ5" are used for time points in FIG. 3. The control operation of the comparative example and the control operation of the present embodiment differ in a length of a period IV from the time point τ3 to the time point τ4. In a period I from the time point τ0 to the time point τ1, the controller 7 receives a switching instruction and thereby determines the start of the switching operation. The switching instruction from 2WD to 4WD causes generation of the engagement instruction, which shifts the dog clutch 10 from the disengaged state into the engaged state.

In response to the engagement instruction, the controller 7 drives the rear wheel MG 82 during a period II from the time point τ1 to the time point τ2 and thereby increases an input shaft rotational speed Nin toward an output shaft rotational speed Nout so as to synchronize the rotation of the input shaft 3 and the rotation of the output shaft 4 with each other. The output shaft rotational speed Nout corresponds to a rotational speed of the axle, which is proportional to a vehicle speed. The operation of coinciding (operation of matching) the input shaft rotational speed Nin with the output shaft rotational speed Nout is referred to as a synchronization operation. During the periods I and II, the dog clutch 10 is in the disengaged state shown in FIG. 4 where the engagement teeth 13 and 14 are separated from each other.

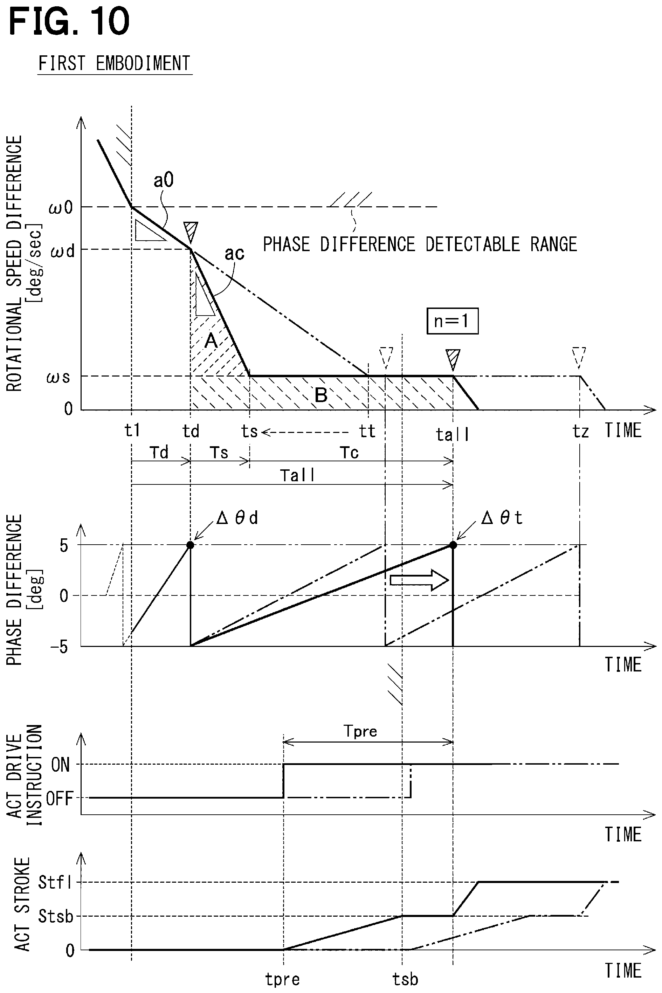

A target rotational speed N_tgt of the input shaft rotational speed Nin is set such that a difference ΔN between the input shaft rotational speed Nin and the output shaft rotational speed Nout is within an allowable range for engagement shock. The engagement is executed at a timing (i.e., an engagement timing) at which the following conditions are met: the input shaft rotational speed Nin reaches the target rotational speed N_tgt; the input-output rotational speed difference ΔN becomes equal to or smaller than a target rotational speed difference ωs; the ACT stroke reaches a standby stroke Stsb; and the phase difference reaches an allowable phase difference that allows the engagement. Hereinafter, the input-output rotational speed difference is referred to as a rotational speed difference for simplicity. The rotational speed difference is defined as a value of zero or a positive value. The symbol "ωs" will be described later in the explanation of FIGS. 9 and 10.

When the input shaft rotational speed Nin reaches the target rotational speed N_tgt at the time point τ2, a drive instruction is outputted to the clutch actuator 5. During a period III from the time point τ2 to the time point τ3, the ACT stroke changes from 0 to the standby stroke Stsb, and the dog clutch 10 shifts from the disengaged state to a standby position shown in FIG. 4. In the standby position, for example, the tooth crest surfaces of the engagement teeth 13 and the tooth crest surfaces of the engagement teeth 14 come into contact, resulting in a state with no clearance.

During the period IV from the time point τ3 to the time point τ4, phase alignment is performed between the first clutch member 11 and the second clutch member 12. In a state where the execution of the engagement becomes possible after completion of the phase alignment, during a period V from the time point τ4 to the time point τ5, the ACT stroke changes from the standby stroke Stsb to a full stroke Stfl, and the dog clutch 10 shifts from the standby position to a fully engaged state shown in FIG. 4. The sum of the periods III, IV, and V serves as a clutch operation period.

In the previously proposed technology that predicts the future engagement timing by approximation based on the past engagement timings, an error relative to the actual operation increases, and the phase alignment time length becomes longer. The phase alignment time length becomes dominant within the clutch operation time length, and consequently, responsiveness to the engagement instruction deteriorates. Accordingly, an objective of the present embodiment is to shorten the phase alignment time length by controlling the phase difference adjustment. This enables highly responsive switching from 2WD to 4WD by the clutch engagement.

The configuration of the dog clutch engagement control system of the present embodiment will be described with reference to FIGS. 5 to 8. In FIG. 5 and subsequent drawings, the description will focus only on the clutch engagement at the side of the rear wheels 92 of the vehicle 90, and the rear wheel MG 82 will be simply referred to as MG 82. The rotational speed of the MG 82 is detected by a rotational speed sensor 23, such as a resolver, and is converted into the rotational speed of the input shaft 3 by being multiplied by a speed reduction ratio of the speed reducer 88. In FIG. 5, it is assumed that the input shaft rotational speed Nin after the conversion is inputted to the controller 7. On the other hand, the rotational speed of the output shaft 4 is detected by a rotational speed sensor 24, such as a wheel speed sensor, and the output shaft rotational speed Nout after the conversion is inputted to the controller 7.

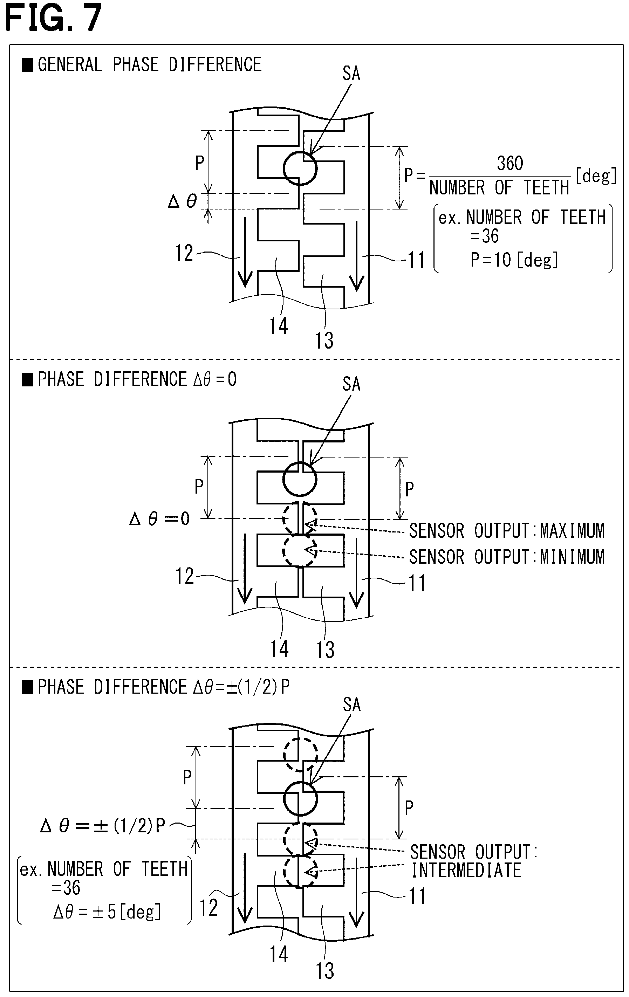

The phase difference sensor 6 includes, for example, a magnetic detection element (e.g., a Hall element) and a magnet. An axial position, which spans the first engagement tooth 13 and the second engagement tooth 14, serves as a detection range SA (see FIG. 7) of the phase difference sensor 6. The phase difference sensor 6 is arranged on a radially outer side of the first and second engagement teeth 13,14 and is opposed to the clutch axis Z, so as not to interfere with the dog clutch 10. The phase difference sensor 6 detects a total area of the corresponding first engagement tooth 13 and the corresponding second engagement tooth 14 passing through the detection range SA as they rotate, based on changes in magnetic flux intensity.

A pitch angle P is an angle obtained by dividing the angle of one full rotation (i.e., 360 degrees) of the first clutch member 11 and the second clutch member 12 by the number of the teeth. For example, the number of each of the first engagement teeth 13 and the second engagement teeth 14 is 36, and thus the pitch angle P is 10 degrees. FIG. 7 shows an example where the number of the teeth is assumed to be 36, and a range of the phase difference is ±5 degrees. Note that another definition of the phase difference, which is different from this one, will be described in the section of "Other Embodiments" discussed below.

A top segment of FIG. 7 shows the general phase difference Δθ during rotation. A middle segment of FIG. 7 shows a state of "phase difference Δθ = 0," in which the rotational phase of the first engagement teeth 13 and the rotational phase of the second engagement teeth 14 coincide with each other. In this state, the first clutch member 11 and the second clutch member 12 are not engageable. The sensor output reaches its maximum at the timing when the corresponding one of the first engagement teeth 13 and the corresponding one of the second engagement teeth 14 are both included within the detection range SA, and the total area of these corresponding teeth in the detection range SA is maximized. The sensor output reaches its minimum at the timing when the corresponding tooth space of the first engagement teeth 13 and the corresponding tooth space of the second engagement teeth 14 are both included within the detection range SA, and the total area of these corresponding teeth in the detection range SA is minimized.

A bottom segment of FIG. 7 shows a state of "phase difference Δθ = ±(1/2)P (= ±5 deg)," in which the rotational phase of the first engagement teeth 13 and the rotational phase of the second engagement teeth 14 are shifted from each other by half of the pitch angle P. In this state, the first clutch member 11 and the second clutch member 12 are engageable. The sensor output reaches an intermediate value at the timing when the corresponding tooth of one of the first engagement teeth 13 and the second engagement teeth 14 and the corresponding tooth gap of the other one of the first engagement teeth 13 and the second engagement teeth 14 are included in the detection range SA, and the total area becomes an intermediate value between the maximum and minimum values.

Referring back to FIG. 5, the controller 7 switches between the engagement and the disengagement of the dog clutch 10 based on the engagement instruction or a disengagement instruction received from the outside. The controller 7 obtains the phase difference sensor signal, the input shaft rotational speed Nin and the output shaft rotational speed Nout. Then, based on this information, the controller 7 controls the rotation of the MG 82 and outputs the drive instruction to the clutch actuator 5. Upon receiving the engagement instruction to engage the dog clutch 10 from its disengaged state, the controller 7 starts the synchronization operation. In the synchronization operation, the controller 7 rotates the MG 82 to increase the input shaft rotational speed Nin so as to bring it closer to the output shaft rotational speed Nout.

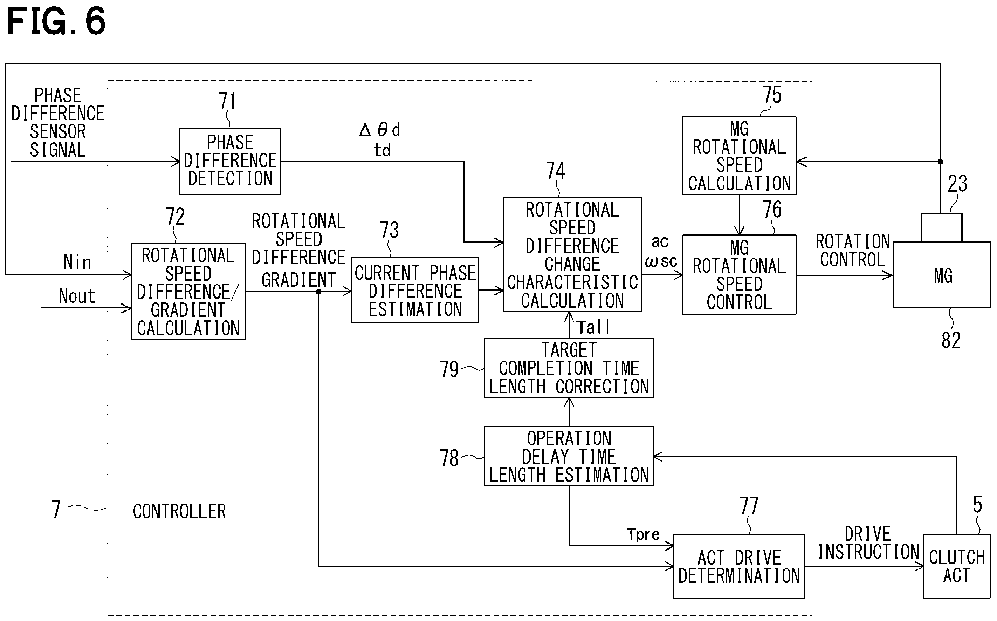

As shown in FIG. 6, the controller 7 includes a phase difference detection unit 71, a rotational speed difference/gradient calculation unit 72, a current phase difference estimation unit 73, a rotational speed difference change characteristic calculation unit 74, an MG rotational speed calculation unit 75, an MG rotational speed control unit 76, an ACT drive determination unit 77, an operation delay time length estimation unit 78 and a target completion time length correction unit 79. The symbols Δθd, td, ac, ωsc, Tall and Tpre in the drawing will be described later in the description of FIGS. 9 and 10.

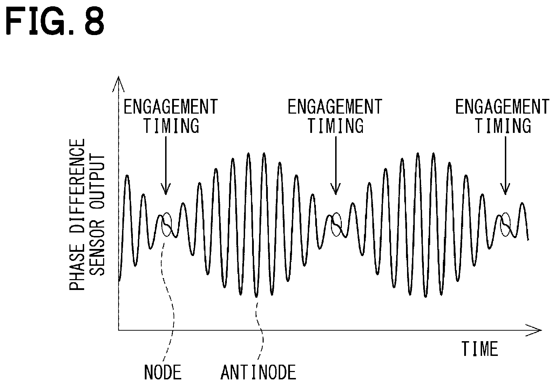

The phase difference detection unit 71 filters the output of the phase difference sensor 6 (hereinafter referred to as a phase difference sensor output) to remove fluctuation components in a predetermined frequency range. As shown in FIG. 8, after the filtering process, the phase difference sensor output exhibits a beat waveform. Each of the nodes of the beat waveform corresponds to an allowable phase difference (Δθ = ±(1/2)P) that allows the dog clutch 10 to be shifted into the engaged state. The phase difference detection unit 71 outputs: the phase difference Δθd, which is detected from the phase difference sensor output; and the time point td, at which the phase difference Δθd is detected, to the rotational speed difference change characteristic calculation unit 74.

The rotational speed difference/gradient calculation unit 72 calculates: a rotational speed difference between the input shaft rotational speed Nin and the output shaft rotational speed Nout; and a gradient, which is a time rate of change of the rotational speed difference. The gradient is a time rate of change of the input-output rotational speed difference and is calculated by dividing the rotational speed difference by the elapsed time. Further, a target value of the gradient in the rotational speed difference control operation is referred to as a target gradient. The current phase difference estimation unit 73 estimates a current phase difference based on the integrated value of the rotational speed difference from a predetermined reference time point to the present. When the estimated phase difference at each time point is plotted, the plot exhibits a sawtooth waveform, as shown in FIG. 9 and subsequent figures. This makes it possible to predict the phase difference at any future time point.

Based on information, which is obtained from the phase difference detection unit 71 and includes the phase difference Δθd and the time point td, the rotational speed difference change characteristic calculation unit 74 calculates a target gradient ac or a target rotational speed difference ωsc as a change characteristic of the rotational speed difference to be changed by the phase difference adjustment control operation. As the change characteristic of the rotational speed difference, the gradient is changed in the first to fourth embodiments, and the target rotational speed difference is changed in the seventh embodiment. In the fifth and sixth embodiments, both the gradient and the target rotational speed difference are changed. Details will be explained later in each embodiment.

The MG rotational speed calculation unit 75 calculates the current MG rotational speed based on the output from the rotational speed sensor 23 and notifies the calculated speed to the MG rotational speed control unit 76. The MG rotational speed control unit 76 controls the rotation of the MG 82 so as to achieve the target gradient ac or the target rotational speed difference ωsc calculated by the rotational speed difference change characteristic calculation unit 74.

In FIG. 6, the MG rotational speed control unit 76 is depicted as part of the controller 7 for the sake of convenience. In practice, however, the controller 7 is constituted by a functional partnership between the controller of the dog clutch engagement control system 100 and a separate MG controller. Primarily for the purpose of drive control for the rear wheels 92 during power-running and regenerative operations after the clutch engagement, the MG controller controls the power supply from the power source to the MG 82 by operating an inverter. In contrast, the MG rotational speed control unit 76 in FIG. 6 is dedicated to controlling the input shaft rotational speed Nin during the synchronization operation prior to the clutch engagement. That is to say, of all the functions of the MG controller, at least a part that executes the synchronization operation corresponds to the MG rotational speed control unit 76.

In response to the engagement instruction, the ACT drive determination unit 77 drives the clutch actuator 5 in the forward direction in two stages. First, the ACT drive determination unit 77 moves the clutch actuator 5 to a standby position before the engagement timing. Subsequently, at the time of executing the engagement, the ACT drive determination unit 77 moves the clutch actuator 5 to a full stroke position to engage the dog clutch 10. Furthermore, in response to the disengagement instruction, the ACT drive determination unit 77 drives the clutch actuator 5 in a backward direction to disengage the dog clutch 10.

When a factor, which causes an operation delay of the clutch actuator 5, occurs, the operation delay time length estimation unit 78 estimates an operation delay time length. For example, when a time constant of the filtering process in the phase difference detection unit 71 increases, the detection of the phase difference is delayed. In addition, when a computational load on a Central Processing Unit (CPU) of the controller 7 increases, a processing delay and/or a communication delay between the CPUs via a Controller Area Network (CAN) or the like will occur. Furthermore, an operating speed of the clutch actuator 5 may change depending on its temperature. The operation delay time length estimation unit 78 estimates the operation delay time length of the clutch actuator 5 based on this information and adjusts an ACT preliminary operation time length Tpre according to the operation delay time length. The adjusted ACT preliminary operation time length Tpre is fed back to the ACT drive determination unit 77.

As referenced in FIGS. 9 and 10, the target completion time length Tall is a time length from the adjustment reference time point t1 to a target completion time point tall at which the engagement is executed. The controller 7 starts the preliminary operation of the clutch actuator 5 at a time point that precedes the target completion time point tall by a predetermined preliminary operation time length Tpre. Although the target completion time length Tall is a predetermined value in principle, if a factor causing the operation delay of the clutch actuator 5 occurs, the target completion time length correction unit 79 corrects the target completion time length Tall according to the operation delay time length and outputs the corrected target completion time length Tall to the rotational speed difference change characteristic calculation unit 74.

The foregoing is the description of the configuration example of the controller 7 according to the present embodiment. The controller 7 of the present embodiment adjusts the phase difference by coordinating the change in the rotational speed difference with the change in the phase difference during the synchronization operation, thereby shortening the time for phase alignment (see FIG. 3) and achieving the highly responsive clutch engagement. Next, a specific configuration of the phase difference adjustment according to each embodiment will be sequentially described.

### (First Embodiment)

Referring to FIGS. 9 to 11, the phase difference adjustment according to the first embodiment will be described. FIG. 9 shows, for the entire period of the synchronization operation in which the input shaft rotational speed Nin increases from 0, input/output rotational speeds, the rotational speed difference, the phase difference and the integrated phase difference, in this order from the top of FIG. 9. FIG. 10 shows, for the period after the adjustment reference time point t1, the rotational speed difference, the phase difference, the ACT drive instruction and the ACT stroke, in this order from the top of FIG. 10. The time charts of the rotational speed difference and the phase difference shown in the second and third charts of FIG. 9 and the first and second charts of FIG. 10 partially overlap, but their time axis ranges are different. FIG. 10 shows the changes during the phase difference adjustment in more detail than FIG. 9, with supplementary information also added in FIG. 10.

In FIGS. 9 and 10, solid lines indicate a control operation of the first embodiment, and dot-dot-dash lines indicate a control operation of the comparative example in which the phase difference adjustment is not executed. Furthermore, a hatched triangle indicates the engagement timing in the control operation of the first embodiment, and a triangle of a dotted line indicates the engagement timing in the control operation of the comparative example. In the first embodiment, the engagement is executed at the target completion time point tall, and in the comparative example, the engagement is executed at a time point tz.

In the chart of the input/output rotational speeds, N [rpm] is used as the symbol for the rotational speed. In the chart of the rotational speed difference, ω [deg/sec] is used as the symbol for the rotational speed difference instead of ΔN for consistency with mathematical equations. The rotational speed difference ΔN [rpm] is converted to ω [deg/sec] using the equation (1). Therefore, the rotational speed difference is treated as a quantity synonymous with the phase difference change rate (or angular velocity difference).$ω \left[deg/sec\right] = ΔN \left[rpm\right] \times 360 \left[deg\right] \div 60 \left[sec\right]$

In the chart of the input/output rotational speeds, the symbols from FIG. 3 are used. The output shaft rotational speed Nout is constant, and the input shaft rotational speed Nin increases from an initial value of 0 toward the output shaft rotational speed Nout. When the input shaft rotational speed Nin reaches the detectable rotational speed N_sen at the time point t1, the phase difference detection by the phase difference sensor 6 becomes possible. This time point is defined as the adjustment reference time point t1.

Furthermore, the target rotational speed N_tgt is set such that a rotational speed difference between the input shaft rotational speed Nin and the output shaft rotational speed Nout is within the allowable range for engagement shock. The engagement is executed at the engagement timing that is after the following conditions are met: the input shaft rotational speed Nin reaches the target rotational speed N_tgt; and the ACT stroke reaches the standby stroke Stsb (see FIG. 10). The arrival time point at which the input shaft rotational speed Nin reaches the target rotational speed N_tgt is a time point tt in the comparative example and a time point ts in the first embodiment.

In a case where the output shaft rotational speed Nout is constant, the chart of the rotational speed difference corresponds to an inverted version of the chart of the rotational speed. A difference between the detectable rotational speed N_sen and the output shaft rotational speed Nout serves as a phase-difference-detectable rotational speed difference ω0. The difference between the target rotational speed N_tgt and the output shaft rotational speed Nout serves as a target rotational speed difference ωs at which the dog clutch 10 is engageable. The controller 7 controls the rotational speed difference, and in response to the engagement instruction, which shifts the dog clutch 10 from the disengaged state into the engaged state, the controller 7 executes the synchronization operation to gradually decrease the rotational speed difference until it reaches the target rotational speed difference ωs.

With respect to the chart of the phase difference, in the case where the number of teeth is 36, the phase difference Δθ varies within a range of ±5 degrees centered on 0 degrees. Although the slopes of the sawtooth wave are, in actuality, curved, they are illustrated as straight lines for the sake of convenience. In the chart of the phase difference, a dotted line in the period before the adjustment reference time point t1 means that the phase difference cannot be detected.

A time point, which is after the adjustment reference time point t1 and at which an arbitrary phase difference is detected based on the output of the phase difference sensor 6, is defined as an arbitrary phase difference detection time point td. In the synchronization operation, the controller 7 detects the current engagement timing based on the output of the phase difference sensor 6. The phase difference, which is detected at the arbitrary phase difference detection time point td, is represented as Δθd, and the rotational speed difference at the phase difference detection time point td is represented as ωd. Assuming that the arbitrary phase difference detection time point td is the present time, the engagement timing illustrated after the time point td indicates a future engagement timing (one of a plurality of future engagement timings). A part of the phase difference chart, which shows a change in the phase difference after the time point td, should be interpreted as showing a resulting change. It is not always necessary for the controller 7 to predict the future change in the phase difference at the time point td. An example, in which it is preferable for the future phase difference to be predicted, will be described later in the eighth embodiment.

In this example, the phase difference Δθd, which is detected at the arbitrary phase difference detection time point td, is +5 degrees that serves as the phase difference at which the dog clutch 10 is engageable. Although the phase difference, at which the dog clutch 10 is engageable, is represented as Δθd = ±5 degrees in FIG. 7, a solution to the equation (4) described later is not uniquely determined if Δθd takes two values in the equation (4). Therefore, a domain of Δθd is defined as "-5 degrees < Δθd ≤ +5 degrees," thereby excluding -5 degrees. Additionally, the target phase difference Δθt at the time of engagement is basically +5 degrees. Therefore, in this example, the equation "Δθt - Δθd = 0" holds true. A slope of the line in the chart of the integrated phase difference represents a phase difference change rate ω [deg/sec].

The controller 7 outputs the drive instruction to the clutch actuator 5 to engage the dog clutch 10 at the future engagement timing after the rotational speed difference reaches the target rotational speed difference ωs. The controller 7 of the present embodiment adjusts the phase difference such that one of the future engagement timings coincides with the target completion time point tall which is the time point after the target completion time length Tall elapses from the adjustment reference time point t1. In other words, the target completion time point tall becomes the target timing for executing the engagement.

The third chart from the top in FIG. 10 shows the ON/OFF state of the drive instruction for the clutch actuator 5. The bottom chart of FIG. 10 shows the stroke of the clutch actuator 5. The controller 7 starts the preliminary operation of the clutch actuator 5 at the time point tpre that precedes the target completion time point tall by the predetermined preliminary operation time length Tpre. The clutch actuator 5 reaches the standby position of the standby stroke Stsb at the time point tsb. Then, at the target completion time point tall, the controller 7 instructs the clutch actuator 5 to move to its full stroke Stfl, thereby bringing the dog clutch 10 into a fully engaged state.

Next, the control operation of the rotational speed difference will be described. Specifically, a description will be given of the control operation for changing the gradient, which is the time rate of change of the rotational speed difference, as a change characteristic of the input-output rotational speed difference. In both a comparative example and the first embodiment, the initial gradient from the adjustment reference time point t1 to the arbitrary phase difference detection time point td is defined as a0. Here, the initial gradient a0 at the time of phase difference detection has a smaller absolute value than a gradient a00 during a period in which the phase difference is not detected from the start of the synchronization operation to the adjustment reference time point t1. In other words, the slope is set to be gentler at the time of the phase difference detection. This setting is effective for reducing the phase difference detection time length.

In the comparative example, the initial gradient a0 remains constant during the period from the adjustment reference time point t1 until an arrival time point tt, at which the rotational speed difference reaches the target rotational speed difference ωs. In contrast, in the first embodiment, the controller 7 calculates the target gradient ac, which is the target value of the gradient, based on the information obtained at the arbitrary phase difference detection time point td, and the controller 7 changes the initial gradient a0 to the target gradient ac. In the first embodiment, the initial engagement timing after the adjustment reference time point t1 is set to the arbitrary phase difference detection time point td.

The controller 7 executes the phase difference adjustment by changing the gradient at the arbitrary phase difference detection time point td and thereby makes one of the future engagement timings coincide with the target completion time point tall. Here, it is assumed that the arbitrary phase difference detection time point td is the current time. Under this assumption, in the first embodiment, the control operation is executed such that the next engagement timing after the current time, that is, the first future engagement timing, coincides with the target completion time point tall. In a case where the control operation is executed such that the n-th future engagement timing coincides with the target completion time point tall, n is referred to as the number of adjustment cycles. In the first embodiment, the number of adjustment cycles n is set to 1 (i.e., n = 1).

The target gradient ac has a larger absolute value than the initial gradient a0. In other words, the slope is set to be steeper. Therefore, the arrival time point ts, at which the rotational speed difference reaches the target rotational speed difference ωs, becomes earlier than the arrival time point tt in the comparative example. As a result, the engagement is executed, thereby enabling the transmission of the drive force, at the target completion time point tall, which is earlier than the engagement execution time point tz in the comparative example. This makes it possible to realize highly accurate and highly responsive clutch engagement compared to the comparative example.

A supplementary explanation for the time symbols in the drawings will be provided below. Td represents an initial gradient duration (an initial gradient time length) from the adjustment reference time point t1 to the arbitrary phase difference detection time point td. Ts represents a target gradient duration (a target gradient time length) from the arbitrary phase difference detection time point td to the arrival time point ts. Tc represents a target rotational speed difference duration (a target rotational speed difference time length) from the arrival time point ts to the target completion time point tall. A sum of Td, Ts and Tc is equal to the target completion time length Tall (Td + Ts + Tc = Tall).

Next, a description of a theoretical equation used to calculate the target gradient ac will be provided. The target gradient ac is defined by the equation (2). Also, in the chart of the rotational speed difference in FIG. 10, when a sum of an area of a right triangle A and an area of a rectangle B is equal to an integrated phase difference from the arbitrary phase difference detection time point td to the target completion time point tall, the equation (3) holds true. The coefficient "10" on the right-hand side of the equation (3) indicates the pitch angle P (= 10 degrees) of the gear that has the number of the teeth which is 36. The units of the respective parameters are as follows.

- Rotational speed difference: ωd, ωs (deg/sec)
- Time Length: Ts, Td, Tall (sec)
- Gradient: ac (deg/sec²)
- Phase difference: Δθt, Δθd (deg)
$ac = \frac{ωd - ωs}{Ts}$ $\frac{\left(ωd-ωs\right) Ts}{2} + ωs \left(Tall-Td\right) = 10 n + Δθt - Δθd$

By eliminating Ts from the equation (2) and the equation (3), the equation (4) for obtaining ac can be obtained.$ac = \frac{{\left(ωd-ωs\right)}^{2}}{2 \left\{\left(10n+Δθt-Δθd\right)-ωs\left(Tall-Td\right)\right\}}$

Based on the equation (4), the controller 7 calculates the target gradient ac based on the following six parameters. It should be noted that the number of adjustment cycles n is set as appropriate. If these parameters can be obtained, the controller 7 does not need to predict the future engagement timing at the arbitrary phase difference detection time point td.
- Target completion time length Tall
- Time length Td from the adjustment reference time point t1 to the arbitrary phase difference detection time point td
- Phase difference Δθd detected at the arbitrary phase difference detection time point td
- Target phase difference Δθt at the time of engagement
- Rotational speed difference ωd at the arbitrary phase difference detection time point td
- Target rotational speed difference ωs

Among these, the target completion time length Tall, the target phase difference Δθt at the time of engagement, and the target rotational speed difference ωs are stored as predetermined values. However, as described above with reference to FIG. 6, in the case where the factor, which causes the operation delay of the clutch actuator 5, occurs, the target completion time length correction unit 79 corrects the target completion time length Tall in accordance with the operation delay time length estimated by the operation delay time length estimation unit 78.

The controller 7 obtains information on the following three parameters at the arbitrary phase difference detection time point td.
- Time length Td from the adjustment reference time point t1 to the arbitrary phase difference detection time point td
- Phase difference Δθd detected at the arbitrary phase difference detection time point td
- Rotational speed difference ωd at the arbitrary phase difference detection time point td

The idea behind the equation (3) can be expressed as follows. The controller 7 calculates the target gradient ac such that, during the period from the arbitrary phase difference detection time point td to the target completion time point tall, a time integral of a converted value, which is obtained by converting the rotational speed difference into a phase difference change rate, coincides with a phase difference that is obtained by adding, to an integer multiple of the pitch angle of the first engagement teeth 13 and the second engagement teeth 14, a difference between the target phase difference Δθt at the time of shifting the dog clutch 10 into the engaged state and the phase difference Δθd detected at the arbitrary phase difference detection time point td.

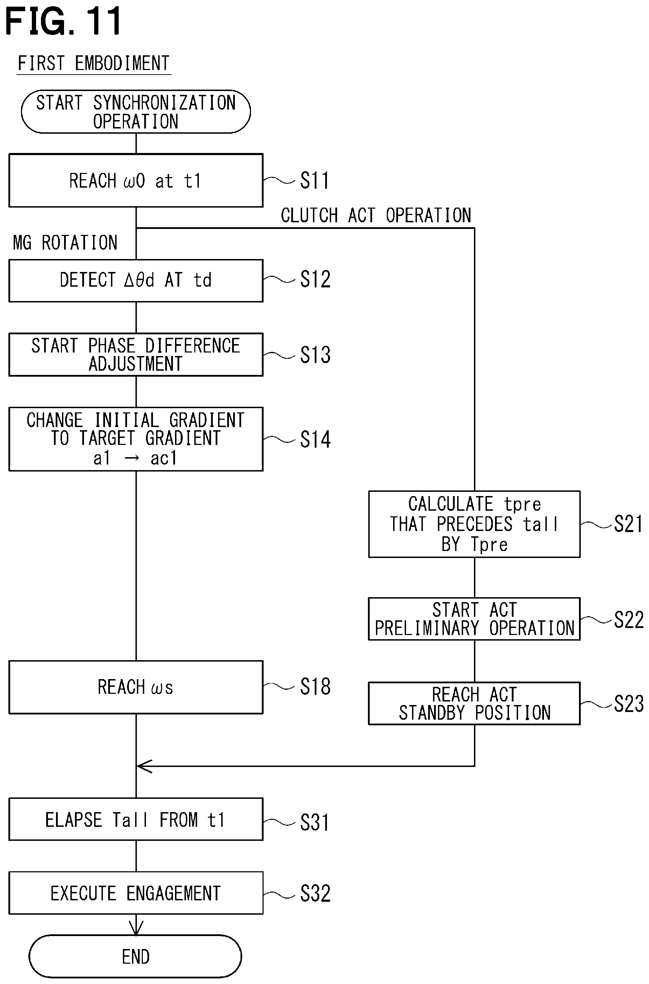

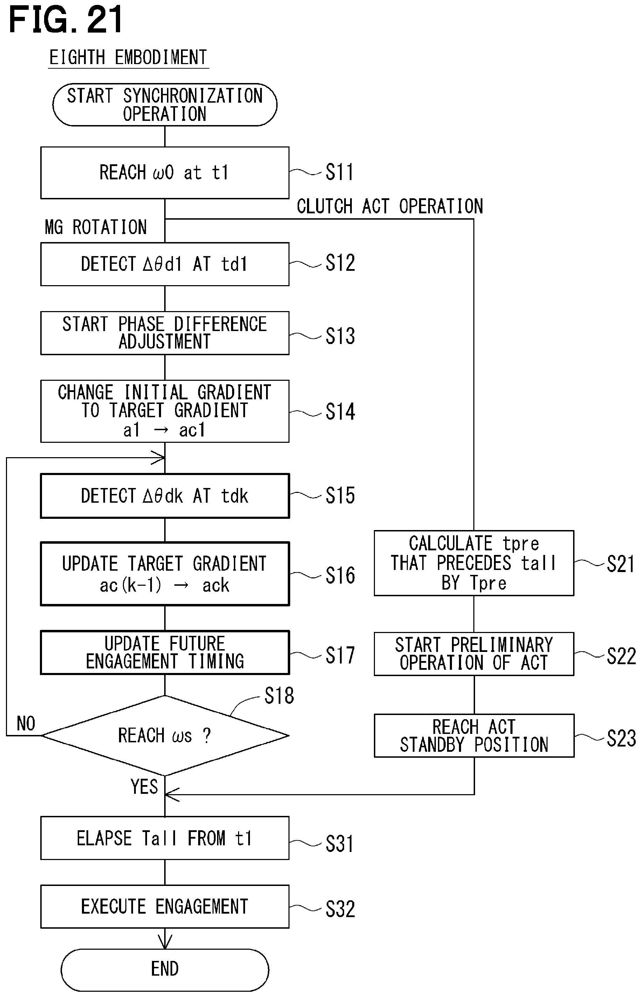

The clutch engagement control operation according to the first embodiment will be described with reference to a flowchart of FIG. 11. In the description of the flowchart, the symbol "S" denotes a step. In order to use step numbers common to those in FIG. 21 of the eighth embodiment, S15 to S17 are intentionally skipped in FIG. 11.

After the synchronization operation starts, the rotational speed difference gradually decreases. In S11, at the adjustment reference time point t1, the phase-difference-detectable rotational speed difference ω0, which is detectable by the phase difference sensor 6, is reached. Thereafter, S12 to S18 are executed for the MG rotation. In S12, the controller 7 detects the phase difference Δθd at the arbitrary phase difference detection time point td. In the first embodiment, the initial engagement timing after the adjustment reference time point t1 is set at the arbitrary phase difference detection time point td.

The controller 7 obtains information on the following: the time length Td from the adjustment reference time point t1 to the arbitrary phase difference detection time point td; the phase difference Δθd detected at the arbitrary phase difference detection time point td; and the rotational speed difference ωd at the arbitrary phase difference detection time point td. Additionally, the controller 7 stores information on the target completion time length Tall, the engagement target phase difference Δθt, and the target rotational speed difference ωs. In S13, the controller 7 starts the phase difference adjustment based on the above-described information.

In S14, the controller 7 calculates the target gradient ac and changes the initial gradient a0 to the target gradient ac. In S18, the rotational speed difference reaches the target rotational speed difference ωs at the arrival time point ts, which occurs after the elapse of the target gradient duration Ts from the arbitrary phase difference detection time point td.

After S11, the controller 7 executes S21 to S23 for the operation of the clutch actuator 5 in parallel with S12 to S18. In S21, the controller 7 calculates the previous time point tpre that precedes the target completion time point tall by the predetermined preliminary operation time length Tpre. In S22, the controller 7 starts the preliminary operation of the clutch actuator 5 at the time point tpre. In S23, the clutch actuator 5 reaches the standby position at the time point tsb.

After S18 regarding the MG rotation and S23 regarding the ACT operation, in S31, the target completion time length Tall elapses from the adjustment reference time point t1. In S32, the engagement of the dog clutch 10 is executed.

In the first embodiment, as described above, the controller 7 calculates the target gradient ac based on the information obtained at the arbitrary phase difference detection time point td, and the controller 7 changes the initial gradient a0 to the target gradient ac. Thereby, the controller 7 makes the first future engagement timing coincide with the target completion time point tall. This makes it possible to realize the phase difference adjustment with high precision and improve the responsiveness of the clutch engagement.

Here, a control operation of a different type is assumed for the purpose of comparison. In the assumed control operation, after the future engagement timing is predicted, this engagement timing is made to approach the arrival timing. In that case, when torque is applied to the input shaft in an attempt to make the engagement timing coincide with the arrival timing, the input shaft rotational speed changes, and the arrival timing shifts. Therefore, the precision of the phase difference adjustment may be deteriorated. In contrast, in this embodiment, the changing of the rotational speed difference gradient and the adjusting of the phase difference are executed simultaneously based on the information obtained at the arbitrary phase difference detection time point td. Therefore, the phase difference adjustment can be achieved with high precision. Furthermore, in this embodiment, the future engagement timing does not necessarily need to be predicted.

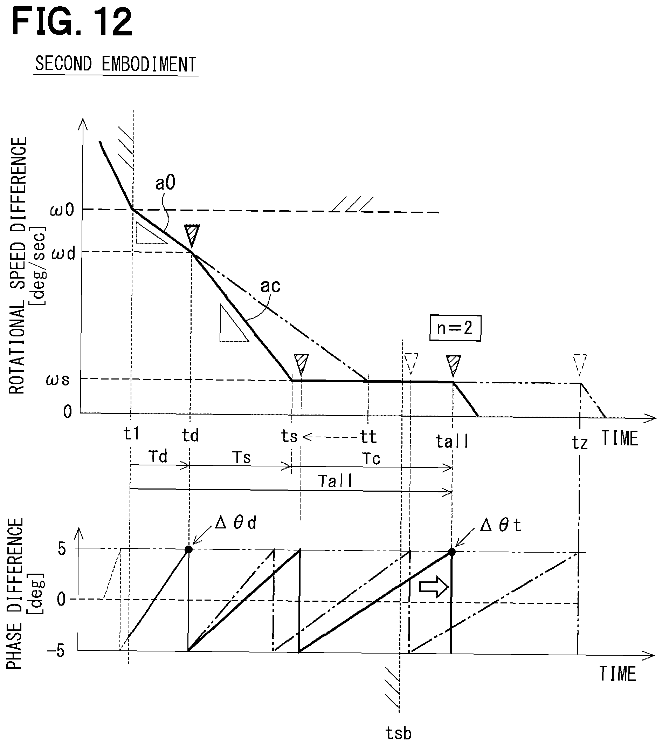

Next, with reference to FIGS. 12 to 17, the phase difference adjustment according to the second to seventh embodiments will be described in order as variations different from the first embodiment. FIGS. 12 to 17 correspond to FIG. 10 of the first embodiment, and the symbols therein for the time points, the time length, the rotational speed differences, the gradients and the phase differences are incorporated from FIG. 10. The dot-dot-dash line indicates the control operation of the comparative example in which the phase difference adjustment is not executed. The chart of the ACT drive instruction and the chart of the ACT stroke are omitted because these charts are the same as those in FIG. 10.

In any of the embodiments, the target phase difference Δθt at the time of engagement is Δθt = +5 degrees. Additionally, except for the fourth embodiment, the phase difference Δθd detected at the arbitrary phase difference detection time point td is the phase difference at which the dog clutch 10 can be engaged, that is, Δθd = +5 degrees. At this time, the following condition is satisfied: Δθt - Δθd = 0. In other words, except for the fourth embodiment, the engagement timing is detected at the arbitrary phase difference detection time point td. Furthermore, except for the third and fourth embodiments, the initial engagement timing after the adjustment reference time point t1 is detected at the arbitrary phase difference detection time point td.

### (Second Embodiment)

In the second embodiment shown in FIG. 12, the target gradient ac is calculated with the number of adjustment cycles n, which is set to n = 2, so that the second engagement timing, which is the future engagement timing after the arbitrary phase difference detection time point td, coincides with the target completion time point tall. As described above, the target gradient ac may be calculated such that the second or subsequent future engagement timing coincides with the target completion time point tall, and the gradient may be changed from the initial gradient a0 to the target gradient ac.

### (Third Embodiment)

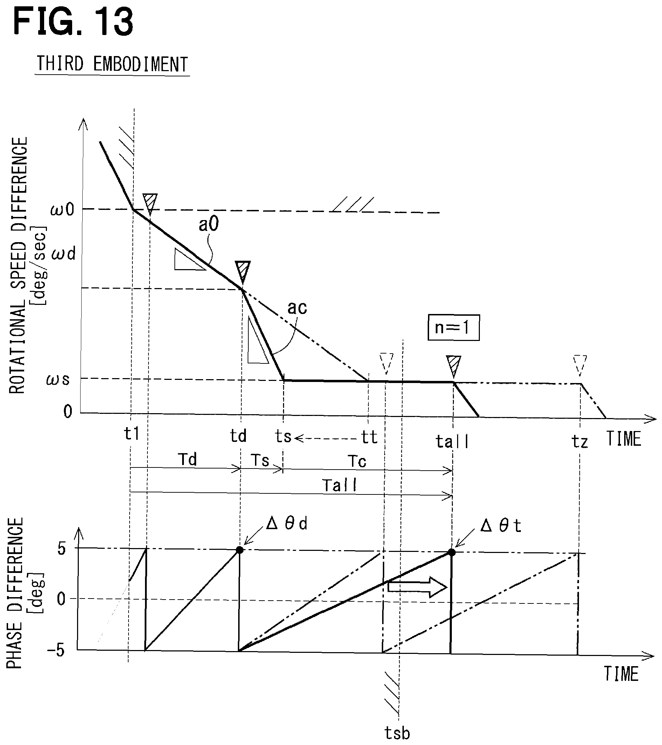

In the third embodiment shown in FIG. 13, the second engagement timing after the adjustment reference time point t1 is set to the arbitrary phase difference detection time point td. In this manner, the second or subsequent engagement timing after the adjustment reference time point t1 may be set as the arbitrary phase difference detection time point td.

### (Fourth Embodiment)

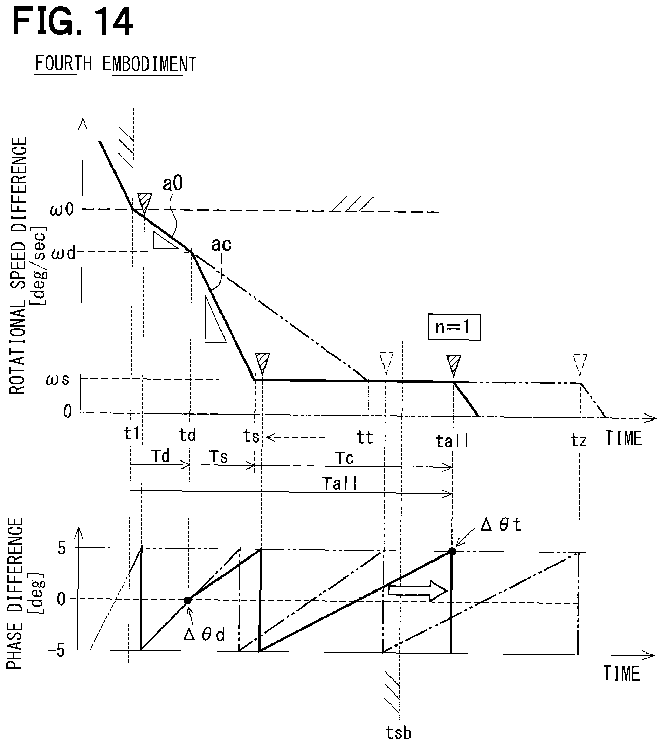

In the fourth embodiment shown in FIG. 14, the phase difference Δθd detected at the arbitrary phase difference detection time point td is the phase difference that results in Δθd=0, which corresponds to the antinode of the beat wave (see FIG. 8). In this case, the following two conditions are satisfied: n=1 and Δθt - Δθd = +5 deg. Thus, the phase difference Δθd detected at the arbitrary phase difference detection time point td may be any phase difference other than the phase difference at which the dog clutch 10 is engageable.

### (Fifth and Sixth Embodiments)

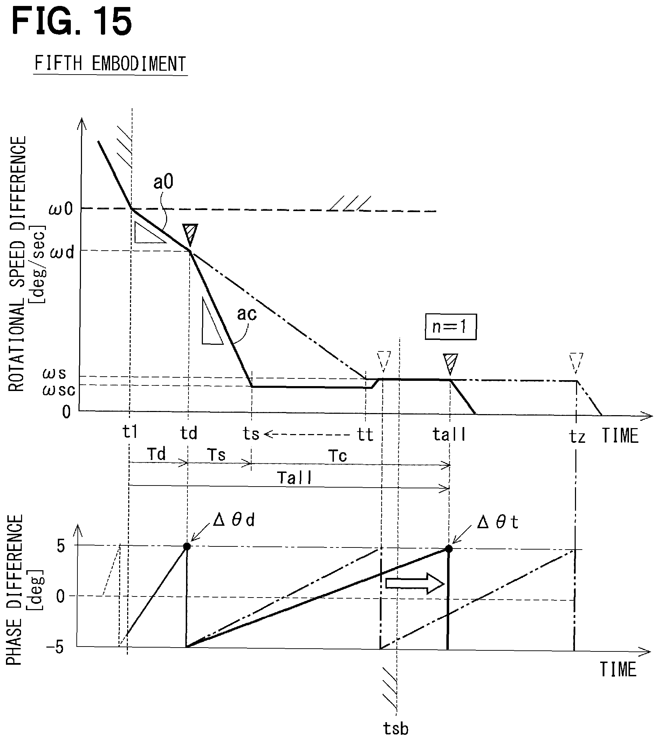

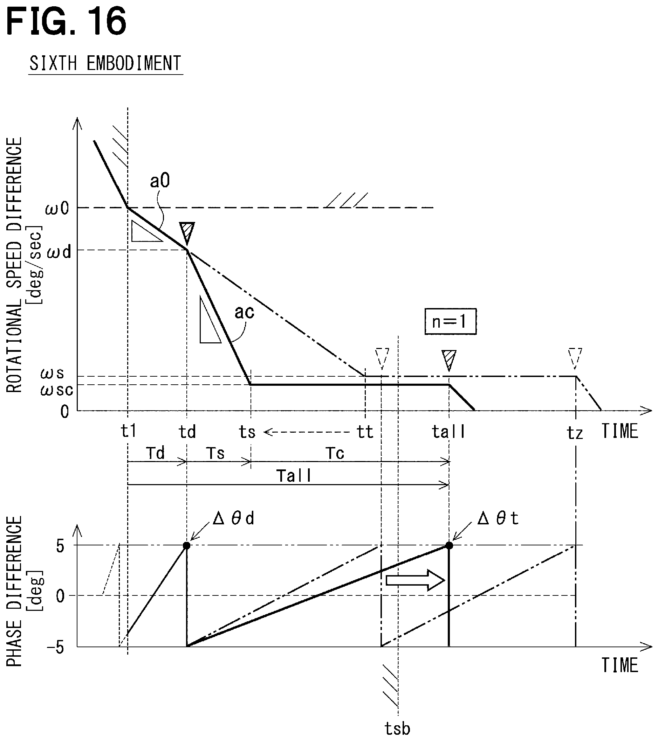

In the fifth and sixth embodiments respectively shown in FIGS. 15 and 16, the controller 7, based on the information obtained at the arbitrary phase difference detection time point td, changes the target rotational speed difference from the reference value ωs to a changed value ωsc in addition to changing the gradient, as the change characteristic of the input-output rotational speed difference. The information obtained by the controller 7 at the arbitrary phase difference detection time point td includes the time length Td, the phase difference Δθd and the rotational speed difference ωd, similar to the calculation parameters for the target gradient ac.

In the examples shown in FIGS. 15 and 16, the changed target rotational speed difference ωsc is set to a value that is smaller than the reference value ωs (ωsc < ωs). Since the rotational speed difference decreases along the target gradient ac to the changed target rotational speed difference ωsc, the arrival time point ts is slightly delayed.

In the fifth embodiment, the target rotational speed difference is returned to the reference value ωs before the target completion time point tall, and the engagement shock at the time of engagement execution is managed at a standard level. In the sixth embodiment, the changed target rotational speed difference ωsc is maintained until the target completion time point tall. Therefore, the engagement shock at the time of engagement execution can be reduced below the standard level.

### (Seventh Embodiment)

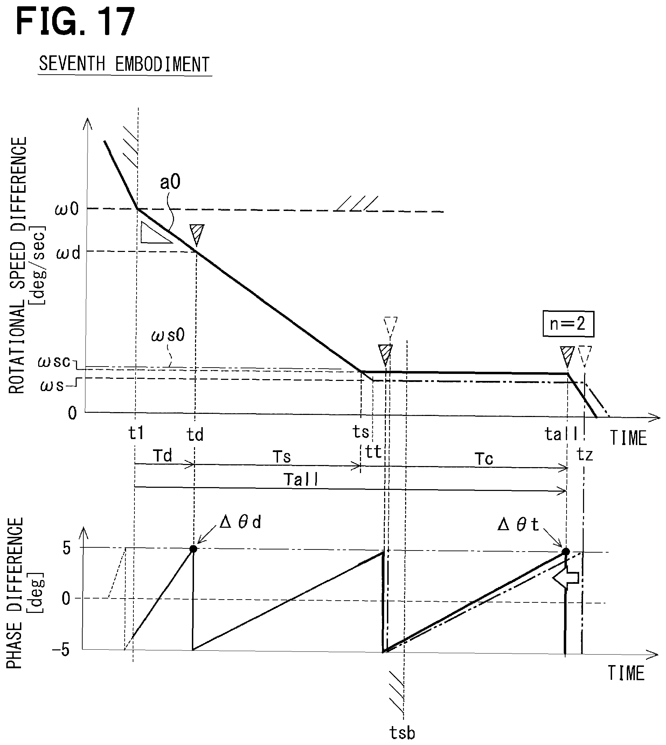

In the seventh embodiment shown in FIG. 17, as the change characteristic of the input-output rotational speed difference, the controller 7, based on the information obtained at the arbitrary phase difference detection time point td, changes the target rotational speed difference from the reference value ωs to a changed value ωsc without changing the gradient. The changed target rotational speed difference ωsc is set to a value that is larger than the reference value ωs (ωsc > ωs).

Here, it is assumed that the reference value ωs of the target rotational speed difference is set to a relatively small value, which is obtained by subtracting a margin from the allowable limit value ωs0 for the engagement shock. Therefore, from the viewpoint of avoiding the effects of the engagement shock, it is possible to change the target rotational speed difference from the reference value ωs to the larger value ωsc within a range not exceeding the margin. By increasing the target rotational speed difference, that is, by decreasing the input shaft rotational speed Nin, a phase difference period (i.e., a period of one cycle of the phase difference) is shortened, and the target completion time point tall is advanced compared to that of the comparative example. Therefore, the responsiveness of the clutch engagement can be improved.

### (Eighth Embodiment)

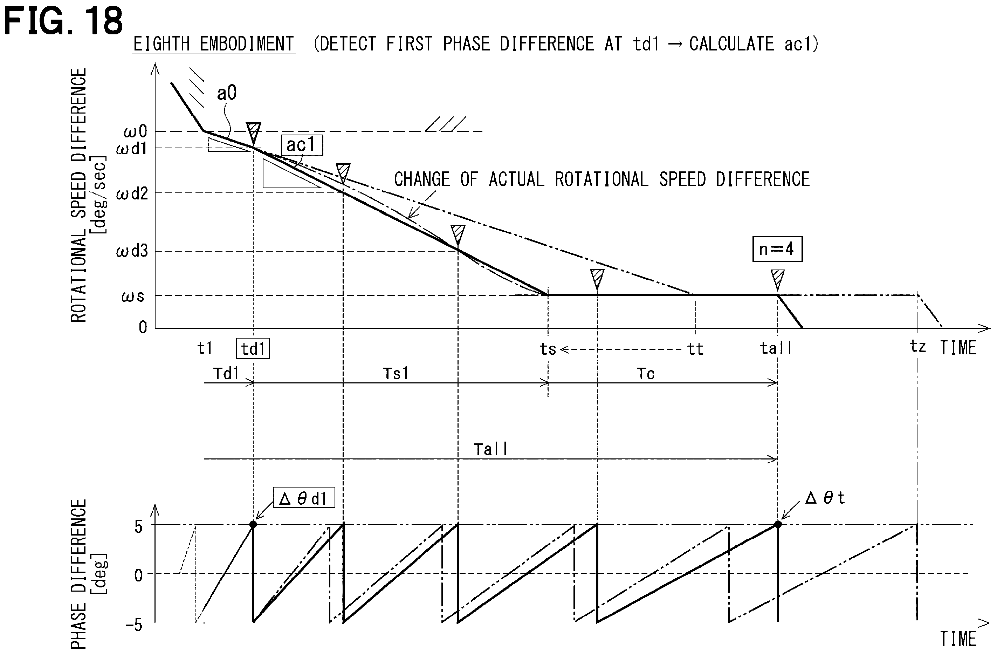

Next, the phase difference adjustment according to the eighth embodiment will be described with reference to FIGS. 18 to 21. The phase difference adjustment includes changing the target gradient ac. In the first to sixth embodiments described above, the phase difference Δθd, which is used for the phase difference adjustment, is detected once at the arbitrary phase difference detection time point td in the period from the adjustment reference time point t1 to the arrival time point ts. During this period, the phase difference detection for the purpose of monitoring the phase difference, for example, may be executed any number of times. However, the phase difference Δθd, which is to be reflected in the phase difference adjustment, is detected only once.

In contrast, the eighth embodiment is based on the premise that, in the period from the adjustment reference time point t1 to the arrival time point ts, the phase difference detection for the purpose of phase difference adjustment is executed a plurality of times at a plurality of arbitrary phase difference detection time points, respectively. Here, there will be described a case in which three phase differences Δθd1, Δθd2 and Δθd3 are detected at three arbitrary phase difference detection time points td1, td2 and td3. Particularly in the eighth embodiment, the controller 7 preferably predicts the future phase differences. In that case, the rotational speed difference change characteristic calculation unit 74 of FIG. 6 obtains the phase difference estimated by the current phase difference estimation unit 73.

FIGS. 18, 19 and 20 are time charts (first to third time charts) for the phase difference adjustment at the three arbitrary phase difference detection time points td1, td2, td3, at which the first, second and third engagement timings after the adjustment reference time point t1 are detected, respectively. The first and second time charts show provisional operations, respectively, and the third time chart shows a final operation. Similar to the drawings of the embodiments described above, the dot-dot-dash line indicates the control operation of the comparative example in which the phase difference adjustment is not executed.

As shown in FIG. 18, at the first arbitrary phase difference detection time point td1, the first target gradient ac1 is calculated based on the time length Td1, the phase difference Δθd1 and the rotational speed difference ωd1, and the initial gradient a0 is changed to the first target gradient ac1. At this time point, the future operation is provisionally predicted on the assumption that the first target gradient ac1 will be maintained until the arrival time point ts.

However, during the control operation after the arbitrary phase difference detection time point td1, the actual phase difference may deviate from the target phase difference depending on the control cycle, the rotational speed detection accuracy, and the detection accuracy of the phase difference sensor. Alternatively, as indicated by the dot-dash line, the actual rotational speed difference may change without following the target gradient ac.

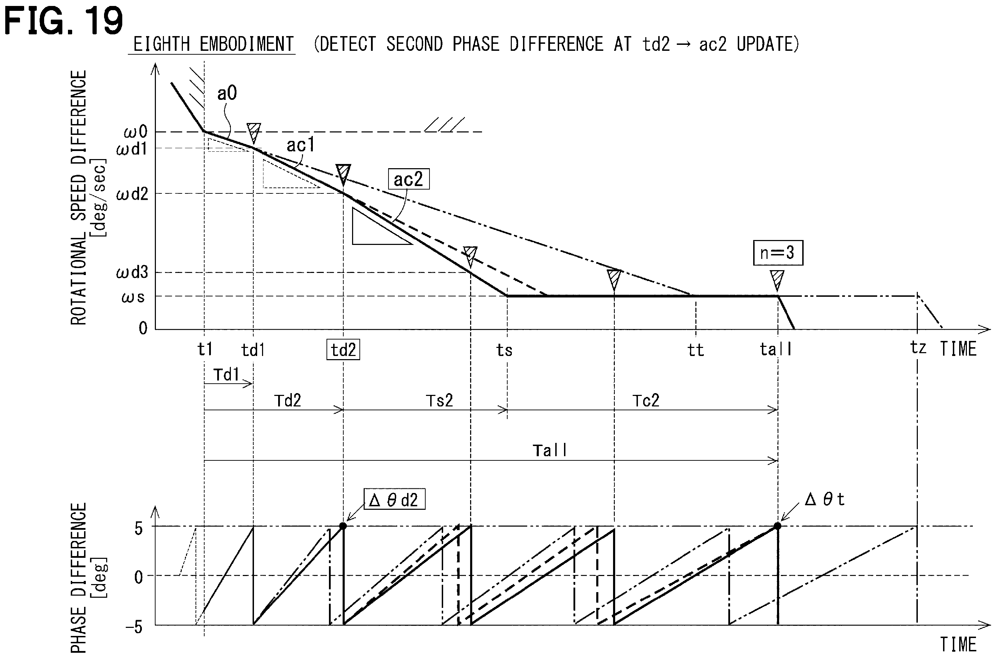

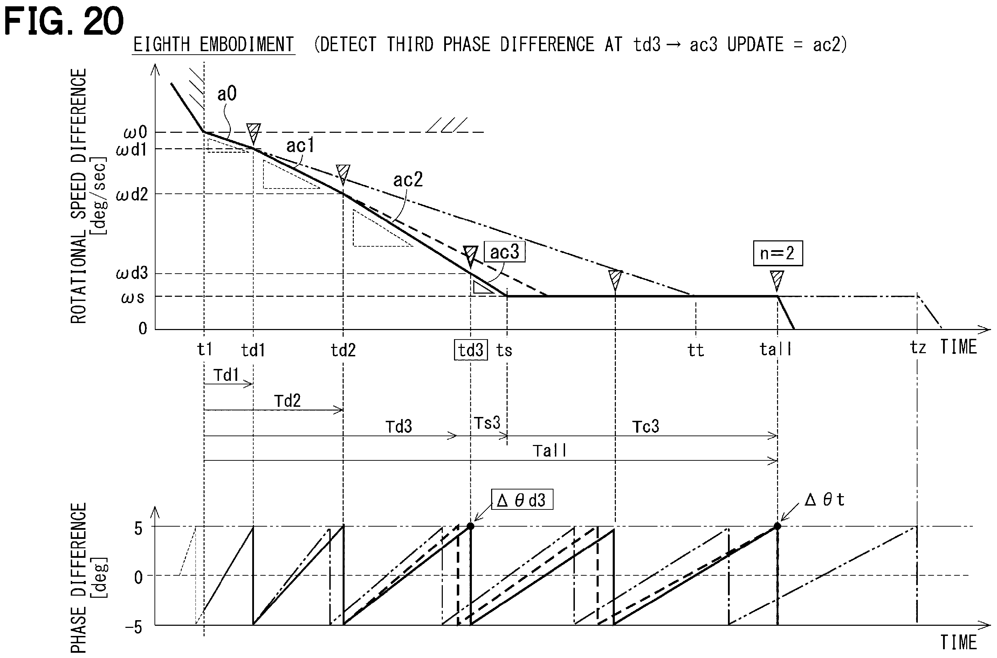

Therefore, the controller 7 newly calculates target gradients ac2, ac3 at the arbitrary phase difference detection time points td2, td3, respectively, which are the second and third opportunities for the engagement timing detection, and the controller 7 updates the previously calculated target gradient. In FIGS. 19 and 20, a dotted line indicates the operation calculated at the first arbitrary phase difference detection time point td1.

As shown in FIG. 19, at the second arbitrary phase difference detection time point td2, the second target gradient ac2 is calculated based on the time length Td2, the phase difference Δθd2 and the rotational speed difference ωd2, and the target gradient is updated from the previous value, i.e., the first target gradient ac1, to the current value, i.e., the second target gradient ac2. At this time, the accuracy is improved because the phase difference predicted at the previous arbitrary phase difference detection time point td1 is referenced with respect to the currently detected phase difference Δθd2. In the example of FIG. 19, a deviation occurs between the target operation based on the first target gradient ac1 and the actual operation. In addition, the second target gradient ac2, which is calculated at the second arbitrary phase difference detection time point td2, has a value different from that of the first target gradient ac1.

As shown in FIG. 20, at the third arbitrary phase difference detection time point td3, the third target gradient ac3 is calculated based on the time length Td3, the phase difference Δθd3 and the rotational speed difference ωd3, and the target gradient is updated from the previous value, i.e., the second target gradient ac2, to the current value, i.e., the third target gradient ac3. Similarly, the accuracy is improved by referencing the phase difference predicted at the previous arbitrary phase difference detection time point td2 with respect to the currently detected phase difference Δθd3. In the example of FIG. 20, almost no deviation occurs between the target operation based on the second target gradient ac2 and the actual operation. Therefore, the third target gradient ac3 calculated at the third arbitrary phase difference detection time point td3 has almost the same value as the second target gradient ac2.

The calculation equations for the target gradients ac1, ac2, ac3 at the arbitrary phase difference detection time points td1, td2, td3 are shown in the equations (5.1), (5.2) and (5.3), respectively. Here, it is assumed that one arbitrary phase difference detection time point is set for each phase cycle after the adjustment reference time point t1. Under this assumption, the number of adjustment cycles n is decremented by one at each phase difference detection. In the examples of FIGS. 18 to 20, n is 4 for the first time, and n is 3 for the second time, and n is 2 for the third time. In this example, the detected phase differences Δθd1, Δθd2, Δθd3 and the engagement target phase difference Δθt are set such that Δθd1 = Δθd2 = Δθd3 = Δθt = +5 degrees.$ac 1 = \frac{{\left(ωd1-ωs\right)}^{2}}{2 \left\{\left(10\times 4+Δθt-Δθd1\right)-ωs\left(Tall-Td1\right)\right\}}$ $ac 2 = \frac{{\left(ωd2-ωs\right)}^{2}}{2 \left\{\left(10\times 3+Δθt-Δθd2\right)-ωs\left(Tall-Td2\right)\right\}}$ $ac 3 = \frac{{\left(ωd3-ωs\right)}^{2}}{2 \left\{\left(10\times 2+Δθt-Δθd3\right)-ωs\left(Tall-Td3\right)\right\}}$

FIG. 21 shows a flowchart of the clutch engagement control operation according to the eighth embodiment. Compared to FIG. 11, FIG. 21 includes additional loop steps of S15 to S17. S18 also serves as the decision step for loop termination. The other steps are substantially the same as those in FIG. 11 and are therefore assigned the same step numbers, and a description thereof is omitted. Here, it should be noted that the symbols are changed in S12, where td is changed to td1 and Δθd is changed to Δθd1, and in S14, where ac is changed to ac1.

In S15, the k-th (where k ≥ 2) phase difference Δθdk is detected at the arbitrary phase difference detection time point tdk. In S16, the controller 7 updates the target gradient ac(k-1), which is calculated at the previous arbitrary phase difference detection time point td(k-1), to the target gradient ack, which is calculated at the current arbitrary phase difference detection time point tdk. Accordingly, in S17, the future engagement timing is updated.

In S18, it is determined whether the rotational speed difference has reached the target rotational speed difference ωs. If the result in S18 is NO, S15 to S17 are repeated. If the result in S18 is YES, the update of the target gradient is completed, and the process proceeds to S31. In S31, when the target completion time length Tall has elapsed from the adjustment reference time point t1, the engagement of the dog clutch 10 is executed in S32.

As described above, in the eighth embodiment, the clutch engagement with the higher precision and faster response can be achieved by repeatedly updating the target gradients ac1 to ack through the feedback control based on the multiple phase difference detections during the period from the adjustment reference time point t1 to the arrival time point ts.

### (Other Embodiments)

(a) The dog clutch illustrated in FIGS. 1 and 5 has a face-type gear configuration in which the clutch members 11, 12 themselves move relative to each other in the axial direction, and the first engagement teeth 13 of the first clutch member 11 and the second engagement teeth 14 of the second clutch member 12 can directly mesh. Alternatively, instead of this configuration, a sleeve-type clutch may be employed. In this type of clutch, the clutch members are stationary in the axial direction, and a movable sleeve is provided as a separate component that functions as a relay member.
   The sleeve-type clutch is disclosed, for example, in JP2010-96190A. In the sleeve-type clutch, the first engagement teeth of the first clutch member and the second engagement teeth of the second clutch member can engage with each other via the sleeve that serves as the relay member. The clutch actuator moves the sleeve axially relative to the first and second clutch members, thereby switching the dog clutch between the engaged state and the disengaged state. A detection unit of the phase difference sensor is adjusted such that the sensor signal outputted in the engaged state is different from the sensor signal outputted in the disengaged state.
(b) The dog clutch 10 is not limited to the configuration in which the dog clutch 10 is provided between the rear wheel MG 82 and the rear wheels 92 in the vehicle 90 that can switch between 2WD and 4WD illustrated in FIG. 1. For example, the dog clutch 10 may be provided between the front-wheel MG and the front wheels in a front wheel drive (FF) vehicle.
(c) The phase difference sensor 6 is not limited to the one that detects the total area of the engagement teeth 13, 14 within the detection range SA as illustrated in FIGS. 5 and 7. That is, any sensor may be used as long as the sensor can detect information that correlates with the difference in a rotational position between the input shaft 3 and the output shaft 4 and can convert it into the phase difference. Additionally, as a definition of the phase difference, the phase difference may be defined as zero when the first clutch member 11 and the second clutch member 12 are in a state where they can be engaged. In that case, the phase difference of the dog clutch 10 having 36 teeth varies within a range of 0 to +10 degrees. Regardless of how the phase difference is defined, the relative value of the expression (Δθt - Δθd) in the equation (4) remains the same.
(d) The rotational drive source, which is connected to the input shaft 3, is not limited to the MG 82 and may be, for example, an internal combustion engine. Furthermore, the dog clutch engagement control system may be applied not only to the powertrains of the vehicle but also to a power transmission mechanism of general machinery, or the like.
(e) The synchronization operation is not limited to the operation in which the output shaft rotational speed Nout (i.e., the vehicle speed) is constant, and only the input shaft rotational speed Nin gradually increases. Alternatively, both the output shaft rotational speed Nout and the input shaft rotational speed Nin may change so as to approach each other.
(f) In the synchronization operation shown in FIG. 9, the input shaft 3 is stopped in the disengaged state. After the controller 7 receives the engagement instruction, the input shaft rotational speed Nin increases from 0 rpm toward the target rotational speed N_tgt. In contrast, the input shaft rotational speed Nin may be held at a predetermined target idle speed in the disengaged state. For example, when the target idle speed is increased in response to an increase in the vehicle speed, the synchronization operation time length at high speeds is shortened.

Furthermore, in the vehicle shown in FIG. 2, it is required to promptly switch from 2WD to 4WD in situations such as:(1) during rain, snow, or when the road surface is frozen; (2) when turning a sharp curve; and (3) when braking for a red light ahead or for the end of a traffic jam. Therefore, by setting the target idle speed higher in these situations, the synchronization operation time length can be shortened. However, as a drawback, this worsens power consumption. Therefore, it is preferable to set an appropriate target idle speed according to the operating state of the vehicle, rather than setting the target idle speed higher than necessary.

The present disclosure is not limited to the above-described embodiments and can be realized in various configurations within a range not deviating from the gist thereof.

### (Disclosure of Technical Aspects)

This specification discloses technical aspects, which are listed below. Some of the aspects may be recited as a multiple dependent form, which depends from multiple preceding aspects. Furthermore, some of the aspects may be recited as a multiple dependent form depending from one or more preceding multiple dependent form(s). The aspect(s) recited in the multiple dependent form define multiple technical aspects.

### (Technical Aspect 1)

According to technical aspect 1, there is provided a dog clutch engagement control system, comprising:
a dog clutch (10) that includes:
   a first clutch member (11) which is coupled to an input shaft (3) and has a plurality of first engagement teeth (13) arranged in a circumferential direction of the dog clutch; and
   a second clutch member (12) which is coupled to an output shaft (4) and has a plurality of second engagement teeth (14) arranged in the circumferential direction, wherein the plurality of second engagement teeth are configured to engage with the plurality of first engagement teeth directly or indirectly via a relay member, and the dog clutch is configured to switch between an engaged state, in which the first clutch member and the second clutch member are engaged with each other, and a disengaged state, in which the first clutch member and the second clutch member are disengaged from each other;
a clutch actuator (5) that is configured to relatively move the first clutch member and the second clutch member relative to each other in an axial direction of the dog clutch, or, relatively move the relay member in the axial direction relative to the first clutch member and the second clutch member in a case where the relay member is used;
a phase difference sensor (6) that is configured to detect a phase difference between the first clutch member and the second clutch member; and
a controller (7) that is configured to:
   control an input-output rotational speed difference, which is a difference between a rotational speed of the input shaft and a rotational speed of the output shaft;
   in response to an engagement instruction, which instructs to shift the dog clutch from the disengaged state into the engaged state, execute a synchronization operation to gradually decrease the input-output rotational speed difference until the input-output rotational speed difference reaches a target rotational speed difference (ωs) at which the dog clutch is shiftable into the engaged state;
   in the synchronization operation, with respect to an engagement timing, at which the phase difference reaches an allowable phase difference that allows the dog clutch to be shifted into the engaged state, detect a current latest engagement timing, which is the engagement timing detected most recently, based on an output of the phase difference sensor; and
   output a drive instruction to the clutch actuator to cause the dog clutch to be shifted into the engaged state at one of a plurality of future engagement timings, each of which is subsequent to a timing at which the input-output rotational speed difference reaches the target rotational speed difference, wherein:
after reaching an adjustment reference time point (t1), at which the input-output rotational speed difference reaches a phase-difference-detectable rotational speed difference (ω0) that allows the phase difference sensor to detect the phase difference, the controller is configured to adjust the phase difference between the first clutch member and the second clutch member based on information, which is obtained at an arbitrary phase difference detection time point (td) where an arbitrary phase difference is detected according to the output of the phase difference sensor, by changing a change characteristic of the input-output rotational speed difference, such that the one of the plurality of future engagement timings coincides with a target completion time point (tall) that is a time point at which a target completion time length (Tall) elapses from the adjustment reference time point.

### (Technical Aspect 2)

According to technical aspect 2, there is provided the dog clutch engagement control system according to technical aspect 1, wherein:
a time rate of change of the input-output rotational speed difference is defined as a gradient, and the gradient in a period from the adjustment reference time point to the arbitrary phase difference detection time point is defined as an initial gradient (a0), and
the controller is configured to calculate a target gradient (ac), which is a target value of the gradient, based on the information obtained at the arbitrary phase difference detection time point, and the controller is configured to change from the initial gradient to the target gradient.

### (Technical Aspect 3)

According to technical aspect 3, there is provided the dog clutch engagement control system according to technical aspect 2, wherein the controller is configured to calculate the target gradient based on:
the target completion time length (Tall);
a time length (Td) from the adjustment reference time point to the arbitrary phase difference detection time point;
the phase difference (Δθd) that is detected at the arbitrary phase difference detection time point;
a target phase difference (Δθt) at a time of shifting the dog clutch into the engaged state;
the input-output rotational speed difference (ωd) at the arbitrary phase difference detection time point; and
the target rotational speed difference (ωs).

### (Technical Aspect 4)

According to technical aspect 4, there is provided the dog clutch engagement control system according to technical aspect 3, wherein the controller is configured to calculate the target gradient such that, during a period from the arbitrary phase difference detection time point to the target completion time point, a time integral of a converted value, which is obtained by converting the input-output rotational speed difference into a phase difference change rate, coincides with a phase difference that is obtained by adding, to an integer multiple of a pitch angle of the plurality of first engagement teeth and the plurality of second engagement teeth, a difference between the target phase difference (Δθt) at the time of shifting the dog clutch into the engaged state and the phase difference (Δθd) detected at the arbitrary phase difference detection time point.

### (Technical Aspect 5)

According to technical aspect 5, there is provided the dog clutch engagement control system according to any one of technical aspects 1 to 4, wherein the phase difference, which is detected at the arbitrary phase difference detection time point, is a phase difference that enables the dog clutch to be shifted into the engaged state.

### (Technical Aspect 6)

According to technical aspect 6, there is provided the dog clutch engagement control system according to any one of technical aspects 1 to 5, wherein the controller is configured to change the target rotational speed difference based on the information obtained at the arbitrary phase difference detection time point.

### (Technical Aspect 7)

According to technical aspect 7, there is provided the dog clutch engagement control system according to any one of technical aspects 1 to 6, wherein:
the controller is configured to start a preliminary operation of the clutch actuator at a time point (tpre) that precedes the target completion time point by a predetermined preliminary operation time length (Tpre); and
in a case where a factor causing an operational delay of the clutch actuator is generated, the controller is configured to correct the target completion time length in accordance with an operation delay time length of the operation delay.

### (Technical Aspect 8)

According to technical aspect 8, there is provided the dog clutch engagement control system according to any one of technical aspects 2 to 4, wherein:
the arbitrary phase difference detection time point is one of a plurality of arbitrary phase difference detection time points (td1 to td3), and the phase difference is detected at each of the plurality of arbitrary phase difference detection time points during a period from the adjustment reference time point to an arrival timing (ts), at which the input-output rotational speed difference reaches the target rotational speed difference; and
the controller is configured to update the target gradient, which is calculated at a previous one of the plurality of arbitrary phase difference detection time points, to the target gradient, which is calculated at a current one of the plurality of arbitrary phase difference detection time points.

The controller and a control method thereof described in the present disclosure may be realized by a dedicated computer provided by configuring at least one processor and at least one memory programmed to execute one or more functions embodied by a computer program. Alternatively, the controller and the control method thereof described in the present disclosure may be realized by a dedicated computer provided by configuring at least one processor with one or more dedicated hardware logic circuits. Furthermore, the controller and the control method thereof described in the present disclosure may be realized by one or more dedicated computers configured by a combination of: at least one processor and at least one memory programmed to execute one or more functions; and at least one processor configured by one or more hardware logic circuits. Further, the computer program may also be stored in a computer-readable, non-transitory, tangible storage medium as instructions to be executed by a computer.

The present disclosure has been described with reference to the embodiments. However, the present disclosure is not limited to the above embodiments and the structures described therein. The present disclosure also includes various variations and variations within the equivalent range. Also, various combinations and forms, as well as other combinations and forms that include only one element, more, or less, are within the scope and ideology of the present disclosure.

## Claims

1. A dog clutch engagement control system, comprising:
a dog clutch (10) that includes:
a first clutch member (11) which is coupled to an input shaft (3) and has a plurality of first engagement teeth (13) arranged in a circumferential direction of the dog clutch; and
a second clutch member (12) which is coupled to an output shaft (4) and has a plurality of second engagement teeth (14) arranged in the circumferential direction, wherein the plurality of second engagement teeth are configured to engage with the plurality of first engagement teeth directly or indirectly via a relay member, and the dog clutch is configured to switch between an engaged state, in which the first clutch member and the second clutch member are engaged with each other, and a disengaged state, in which the first clutch member and the second clutch member are disengaged from each other;
a clutch actuator (5) that is configured to relatively move the first clutch member and the second clutch member relative to each other in an axial direction of the dog clutch, or, relatively move the relay member in the axial direction relative to the first clutch member and the second clutch member in a case where the relay member is used;
a phase difference sensor (6) that is configured to detect a phase difference between the first clutch member and the second clutch member; and
a controller (7) that is configured to:
control an input-output rotational speed difference, which is a difference between a rotational speed of the input shaft and a rotational speed of the output shaft;
in response to an engagement instruction, which instructs to shift the dog clutch from the disengaged state into the engaged state, execute a synchronization operation to gradually decrease the input-output rotational speed difference until the input-output rotational speed difference reaches a target rotational speed difference (ωs) at which the dog clutch is shiftable into the engaged state;
in the synchronization operation, with respect to an engagement timing, at which the phase difference reaches an allowable phase difference that allows the dog clutch to be shifted into the engaged state, detect a current latest engagement timing, which is the engagement timing detected most recently, based on an output of the phase difference sensor; and
output a drive instruction to the clutch actuator to cause the dog clutch to be shifted into the engaged state at one of a plurality of future engagement timings, each of which is subsequent to a timing at which the input-output rotational speed difference reaches the target rotational speed difference, wherein:
after reaching an adjustment reference time point (t1), at which the input-output rotational speed difference reaches a phase-difference-detectable rotational speed difference (ω0) that allows the phase difference sensor to detect the phase difference, the controller is configured to adjust the phase difference between the first clutch member and the second clutch member based on information, which is obtained at an arbitrary phase difference detection time point (td) where an arbitrary phase difference is detected according to the output of the phase difference sensor, by changing a change characteristic of the input-output rotational speed difference, such that the one of the plurality of future engagement timings coincides with a target completion time point (tall) that is a time point at which a target completion time length (Tall) elapses from the adjustment reference time point.

2. The dog clutch engagement control system according to claim 1, wherein:
a time rate of change of the input-output rotational speed difference is defined as a gradient, and the gradient in a period from the adjustment reference time point to the arbitrary phase difference detection time point is defined as an initial gradient (a0), and
the controller is configured to calculate a target gradient (ac), which is a target value of the gradient, based on the information obtained at the arbitrary phase difference detection time point, and the controller is configured to change from the initial gradient to the target gradient.

3. The dog clutch engagement control system according to claim 2, wherein the controller is configured to calculate the target gradient based on:
the target completion time length (Tall);
a time length (Td) from the adjustment reference time point to the arbitrary phase difference detection time point;
the phase difference (Δθd) that is detected at the arbitrary phase difference detection time point;
a target phase difference (Δθt) at a time of shifting the dog clutch into the engaged state;
the input-output rotational speed difference (ωd) at the arbitrary phase difference detection time point; and
the target rotational speed difference (ωs).

4. The dog clutch engagement control system according to claim 3, wherein the controller is configured to calculate the target gradient such that, during a period from the arbitrary phase difference detection time point to the target completion time point, a time integral of a converted value, which is obtained by converting the input-output rotational speed difference into a phase difference change rate, coincides with a phase difference that is obtained by adding, to an integer multiple of a pitch angle of the plurality of first engagement teeth and the plurality of second engagement teeth, a difference between the target phase difference (Δθt) at the time of shifting the dog clutch into the engaged state and the phase difference (Δθd) detected at the arbitrary phase difference detection time point.

5. The dog clutch engagement control system according to claim 1 or 2, wherein the phase difference, which is detected at the arbitrary phase difference detection time point, is a phase difference that enables the dog clutch to be shifted into the engaged state.

6. The dog clutch engagement control system according to claim 1 or 2, wherein the controller is configured to change the target rotational speed difference based on the information obtained at the arbitrary phase difference detection time point.

7. The dog clutch engagement control system according to claim 1, wherein:
the controller is configured to start a preliminary operation of the clutch actuator at a time point (tpre) that precedes the target completion time point by a predetermined preliminary operation time length (Tpre); and
in a case where a factor causing an operational delay of the clutch actuator is generated, the controller is configured to correct the target completion time length in accordance with an operation delay time length of the operation delay.

8. The dog clutch engagement control system according to claim 2, wherein:
the arbitrary phase difference detection time point is one of a plurality of arbitrary phase difference detection time points (td1 to td3), and the phase difference is detected at each of the plurality of arbitrary phase difference detection time points during a period from the adjustment reference time point to an arrival timing (ts), at which the input-output rotational speed difference reaches the target rotational speed difference; and
the controller is configured to update the target gradient, which is calculated at a previous one of the plurality of arbitrary phase difference detection time points, to the target gradient, which is calculated at a current one of the plurality of arbitrary phase difference detection time points.
